# EUROPÄISCHE PATENTSCHRIFT

(11) **EP 3 191 742 B1**
(45) Veröffentlichungstag und Bekanntmachung des Hinweises auf die Patenterteilung: **17.03.2021**
(21) Anmeldenummer: 15766770.0
(22) Anmeldetag: 09.09.2015
(51) Int. Cl.: F16H 61/02, F16H 63/30

(54) **GETRIEBE FÜR EIN KRAFTFAHRZEUG**
TRANSMISSION FOR A MOTOR VEHICLE
BOÎTE DE VITESSES POUR VÉHICULE AUTOMOBILE

(30) Priorität: 12.09.2014 DE 102014113156
(43) Veröffentlichungstag der Anmeldung: 19.07.2017
(73) Patentinhaber: Magna PT B.V. & Co. KG, 74199 Untergruppenbach (DE)
(72) Erfinder: BUENDER, Carsten, 70563 Stuttgart (DE)
(74) Vertreter: Rausch, Gabriele
(86) Internationale Anmeldenummer: PCT/EP2015/070546
(87) Internationale Veröffentlichungsnummer: WO 2016/038062

(56) Entgegenhaltungen:
- WO-A1-2011/047774
- DE-A1- 19 717 693
- DE-A1-102013 200 484
- DE-U1-202013 002 494
- KR-A- 20130 048 543

## Beschreibung

Die vorliegende Erfindung betrifft ein Getriebe für ein Kraftfahrzeug.

Aus dem Stand der Technik bekannte Getriebe weisen üblicherweise mindestens einen Aktuator auf. Der Aktuator kann beispielsweise mindestens eine Schaltwalze und/oder mindestens einen Pumpenaktuator und/oder mindestens einen Drehschieber und/oder mindestens eine Schaltanordnung, welche in der noch nicht veröffentlichten Patentanmeldung der Anmelderin DE 102013104552.9 beschrieben ist, aufweisen. Bei dem Aktuator kann es sich beispielsweise um einen vollhydraulischen Aktuator handeln.

Aus dem Stand der Technik ist die Verwendung elektrorheologischer und/oder magnetorheologischer Flüssigkeiten bekannt.

Die DE 10 2013 000 978 B3 beschreibt eine Ventilanordnung für elektrorheologische Flüssigkeiten. Die Ventilanordnung enthält mindestens ein Innenrohr und ein Außenrohr, zwischen denen mindestens eine rohrförmige Elektrode angeordnet ist.
Die
Ventilanordnung enthält mindestens zum Außen- und/oder Innenrohr einen Ventilspalt zum Durchströmen der elektrorheologischen Flüssigkeiten. Im Ventilspalt ist mindestens eine schraubenförmige oder lineare Abdichtwendel angeordnet. In der äußeren Mantelfläche der Elektrode sind mehrere durchdringende beabstandete Aussparungen eingelassen, die einem schraubenförmig gewendelten oder linearen Verlauf folgen.

Mindestens die Aussparungen und die dazwischenliegenden Teile der inneren und/oder der äußeren Mantelfläche des Elektrodenrohrs sind mit einem schraubenförmig gewendelt umlaufenden oder linearen abdichtenden Kunststoffmaterial so ausgegossen oder ausgespritzt, dass auf der äußeren Mantelfläche und/oder auf der inneren Mantelfläche mindestens eine erhabene Abdichtwendel ausgebildet ist und dass die beabstandeten Aussparungen durch mehrere mäanderförmige Umlenkungen miteinander verbunden sind, die mit den Aussparungen einen durchdringenden umlaufenden oder linearen Schlitz bilden, wobei die mäanderförmigen Umlenkungen mit abdichtendem Kunststoffmaterial formschlüssig mit der Elektrode ausgegossen oder ausgespritzt sind.

In DE 10 201 1101 243 A1 wird eine Betätigungseinheit für ein Schaltgetriebe mit einem Schalthebel beschrieben. Der Schalthebel ist mit einem Handschalthebel kinematisch gekoppelt. Die Betätigungseinheit umfasst eine relativ zu dem Schaltgetriebe axial verschiebbare und durch den Schalthebel um ihre Mittelachse schwenkbare Schaltwelle. Der Schalthebel ist mit der Schaltwelle über eine rheologische Vibrationsentkoppelkomponente verbunden.

Die Offenlegungsschrift DE 10 2012 203 095 A1 beschreibt eine Betätigungseinrichtung zur Auswahl von Schaltstufen eines elektromechanischen oder eines Shift-by-Wire-Gangwechselgetriebes, umfassend einen bewegbaren Gangwahlschalter mit monostabilen und/oder bistabilen Schalterstellungen. Die Betätigungseinrichtung zeichnet sich dadurch aus, dass eine Haptik für die Verstellbewegung des Gangwahlschalters durch zumindest einen rheologischen Aktuator mit einem rheologischen Fluid erzeugt ist.

Die Patentschrift DE 103 35 322 B3 beschreibt eine differenzdrehzahlabhängig steuerbare Kupplung mit einem Gehäuse und einem Rotor, der um eine Achse D drehbar im Gehäuse gelagert ist. Das Gehäuse und der Rotor bilden die miteinander koppelbaren Teile der Kupplung. Im Gehäuse ist zumindest ein Paar auf dem Umfang verteilter parallel zur Achse D angeordneter Kolben-Zylinder-Einheiten ausgeführt, die hydraulisches Medium enthalten. Der Rotor ist stirnseitig als Nockenscheibe ausgeführt, die unmittelbar oder mittelbar auf die Kolben des zumindest einen Paares der Kolben-Zylinder-Einheiten einwirkt. Die Zylinder von Kolben-Zylinder-Einheiten mit gegensinniger Kolbenbewegung bei relativer Drehung von Rotor und Gehäuse sind paarweise miteinander hydraulisch verbunden. Das hydraulische Medium ist ein magnetorheologisches Fluid und die Zylinderräume und/oder Verbindungskanäle jeweils zweier miteinander verbundener Kolben-Zylinder-Einheiten sind von einem regelbaren Magnetfeld beaufschlagbar.

Die Offenlegungsschrift DE 10 2011 004 804 A1 beschreibt einen Kraftstrang für eine elektromechanisch betätigbare Bremse, der das Drehmoment eines Elektromotors auf einen Aktuator überträgt. Der Aktuator wandelt eine rotatorische Bewegung einer in einer Spindelmutter drehbar gelagerten Spindel in eine translatorische Bewegung eines mit der Spindelmutter gekoppelten Bremselementes um. In den Kraftstrang ist eine rheologisch arbeitende mechanische Kupplung mit einem rheologischen Material geschaltet, welches bei Anlegen eines elektromagnetischen Feldes in Abhängigkeit von der Stärke des Feldes seinen Zustand von flüssig nach fest ändert, wodurch der Kraftfluss im Kraftstrang verändert oder unterbrochen wird.

Die DE 692 06 257 T3 beschreibt ein Differentialgetriebe mit einem um eine erste Achse drehbaren Zahnradträger, Mittel an dem Träger für dessen Drehung um die erste Achse, ein erstes Abtriebsrad mit einem ersten Durchmesser und ein zweites Abtriebsrad mit einem größeren zweiten Durchmesser, die beide in dem Träger um die erste Achse drehbar gelagert sind. Das Differentialgetriebe weist einen ersten Satz von Zwischenzahnrädern auf, von denen jedes mit dem ersten Abtriebsrad in Eingriff ist und in einer Tasche des Trägers so gelagert ist, dass es um eine Achse eines ersten Satzes von Achsen drehbar ist, die zur ersten Achse parallel und in gleichen Abständen von der ersten Achse angeordnet sind. Das Differentialgetriebe weist einen zweiten Satz von Zwischenzahnrädern auf, von denen jedes mit dem zweiten Abtriebsrad in Eingriff ist und in einer Tasche des Trägers so gelagert ist, dass es um eine Achse eines zweiten Satzes von Achsen drehbar ist, die parallel zur ersten Achse und in gleichen Abständen von der ersten Achse angeordnet sind. Jedes Zwischenzahnrad des ersten Satzes von Zwischenzahnrädern ist mit zwei Zwischenzahnrädern des zweiten Satzes von Zwischenzahnrädern in Eingriff. Die Zwischenzahnräder und die Abtriebsräder sind alle schraubenverzahnt und jedes schraubenverzahnte Zwischenzahnrad hat einen entgegengesetzten Schraubensinn wie jedes mit ihm in Eingriff stehende Zwischenzahnrad und das mit ihm in Eingriff stehende Abtriebsrad. Der Zahnradträger kann ein Mittelteil aufweisen, in welchem mindestens ein Hohlraum definiert ist, der sich über die gesamte Länge des Trägers in Axialrichtung erstreckt. Der Zahnradträger kann weiterhin zwei Endteile aufweisen, die sich mindestens über einen Teil jedes Endes des Hohlraums oder der Hohlräume erstrecken können, um eine Bewegung der Zwischenzahnräder in Axialrichtung in dem Hohlraum oder den Hohlräumen zu begrenzen. In dem Differentialgetriebe kann eine Abdichtung zum Abdichten des Hohlraums oder der Hohlräume vorgesehen sein und in dem Hohlraum oder den Hohlräumen kann ein Schmiermittel vorgesehen sein. Das Schmiermittel kann ein viskoses Fluid sein. Das viskose Fluid kann ein elektrorheologisches Fluid sein und es kann eine Aktivierungseinrichtung zum Aktivieren des Fluids vorgesehen sein.

Die DE10 2013 200 484 A1 zeigt eine Hydraulikanordnung zum hydraulischen Betätigen einer Mehrfachkupplung, wobei ein Betätigungsdruck von einer ersten oder zweiten Hydraulikpumpe erzeugt wird. Der Betätigungsdruck wird über eine erste oder zweite hydraulische Betätigungseinrichtung übertragen, wobei die Hydraulikpumpen reversierbare Förderrichtung aufweisen. Dabei können delikate Verbindungen mit rheologischen Ventilen realisiert werden.

Die WO2011/ 047 774 A1 zeigt eine Vorrichtung zum impulsartigen Freigeben einer in einem Speichergehäuse bevorraten Fluidmenge. Dabei wird eine Kolbenanordnung von einer Federanordnung vorgespannt und mittels einer rheologischen Ventilvorrichtung in dem vorgespannten Zustand gehalten. Durch entsprechendes Ansteuern wird der Kolben freigegeben und die Feder derart bewegt, dass das bevorratete Fluid im Speichergehäuse herausgedrückt wird.

Die aus dem Stand der Technik bekannte Getriebe und Verfahren weisen einige Nachteile auf. Beispielsweise werden in der Regel mehrere Aktoren oder Ventile zur Betätigung von Kupplungen und Schaltung verwendet. Bei einer Verwendung von weniger Aktoren können funktionale Einschränkungen auftreten, beispielsweise hinsichtlich einer Schaltzeit und/oder einer Schaltreihenfolge. Aus dem Stand der Technik bekannte Getriebe können hinsichtlich der Aktuatorik verschleißanfällig sein, beispielsweise hinsichtlich der Ventile. Weiterhin können bekannte Aktuatoren ein Bauraumproblem und/oder ein Gewichtsproblem und/oder ein Kostenproblem aufweisen.

### Offenbarung der Erfindung

Es wird daher ein Getriebe für ein Kraftfahrzeug vorgeschlagen, welches die Nachteile bekannter Getriebe zumindest weitgehend vermeidet. Gemäß der vorliegenden Erfindung, wird die gestellte Aufgabe durch ein Getriebe nach Anspruch 1 gelöst.

Besondere Ausführungsformen der Erfindung ergeben sich aus den abhängigen Ansprüchen.

Unter einem Kraftfahrzeug kann im Rahmen der vorliegenden Erfindung ein beliebiges Fahrzeug verstanden werden, welches zumindest teilweise durch mindestens einen Motor angetrieben werden kann, beispielsweise ein Automobil und/oder ein Motorrad und/oder ein Nutzfahrzeug und/oder ein Elektrofahrrad.

Bei dem Getriebe kann es sich um eine Vorrichtung handeln, welche mindestens eine Getriebeeingangswelle, die mit einem Motor des Kraftfahrzeuges verbindbar ist, und mindestens eine Getriebeausgangswelle umfasst, die in einem eingebauten Zustand des Kraftfahrzeuggetriebes mit Antriebsrädern des Kraftfahrzeuges verbunden sein kann.

Das Getriebe weist mindestens einen rheologischen Aktuator auf. Der rheologische Aktuator kann prinzipiell eine beliebige Vorrichtung sein, welche eingerichtet ist um elektrische Signale, beispielsweise von einer Ansteuerung, in mechanische Bewegungen umzuwandeln.

Der rheologische Aktuator weist mindestens ein rheologisches Fluid auf. Das rheologische Fluid kann beispielsweise ein Fluid sein, bei welchem mindestens eine Fließeigenschaft des Fluids durch Änderung mindestens einer physikalischen Größe veränderbar sein kann, vorzugsweise reversibel veränderbar. Unter dem Ausdruck "reversibel" kann beispielsweise verstanden werden, dass die Fließeigenschaft beliebig häufig verändert werden kann. Bevorzugt kann die Fließeigenschaft des rheologischen Fluids derart durch die Änderung der physikalischen Größe beeinflussbar sein, dass mindestens ein Volumenstrom und/oder mindestens ein Druck des rheologischen Fluids hierdurch regelbar sein kann, beispielsweise zwischen einem vorbestimmten Volumenstrom und/oder Druck und einem verschwindenden Volumenstrom und/oder Druck und/oder zwischen mindestens zwei vorbestimmten Volumenströmen und/oder Drücken.

Das rheologische Fluid kann beispielsweise mindestens eine Flüssigkeit und/oder mindestens ein Gas und/oder mindestens einen Festkörper aufweisen. Das rheologische Fluid kann beispielsweise als Hydraulikfluid einsetzbar sein. Das rheologische Fluid kann bevorzugt ein Öl sein und/oder mindestens ein Öl aufweisen. Das rheologische Fluid kann bevorzugt polarisierbare Partikel aufweisen. Beispielsweise kann das rheologische Fluid ein Öl mit polarisierbaren Partikeln sein.

Das rheologische Fluid kann bevorzugt ein elektrischer Isolator sein. Bei der Fließeigenschaft kann es sich bevorzugt um eine Zähigkeit und/oder eine Elastizität und/oder eine Viskosität und/oder eine Thixotropie und/oder eine Strukturviskosität und/oder eine Rheopexie und/oder eine Dilatanz handeln. Die Fließeigenschaft kann beispielsweise mittels Änderung der physikalischen Größe veränderbar sein. Die physikalische Größe kann beispielsweise ein elektrisches Feld und/oder ein magnetisches Feld und/oder ein elektromagnetisches Feld und/oder eine Temperatur und/oder eine Frequenz eines magnetischen Wechselfeldes und/oder eine Frequenz eines elektrischen Wechselfeldes und/oder eine Frequenz eines elektromagnetischen Wechselfeldes, beispielsweise der Frequenz von Licht, sein. Der rheologische Aktuator kann bevorzugt nur eine Energiequelle aufweisen, beispielsweise nur eine Pumpe und/oder nur einen Elektromotor. Der rheologische Aktuator kann beispielsweise als Pumpenaktuator ausgestaltet sein.

Der rheologische Aktuator weist gemäß der vorliegenden Erfindung mindestens ein rheologisches Ventil auf. Das rheologische Ventil kann beispielsweise eine Vorrichtung sein, welche eingerichtet ist, um die Fließeigenschaft des rheologischen Fluids zu verändern, beispielsweise reversibel. Das rheologische Ventil kann beispielsweise eine Vorrichtung sein, welche die physikalische Größe ändert. Bevorzugt kann das rheologische Ventil eine Vorrichtung sein, welche die physikalische Größe und/oder die Fließeigenschaft des rheologischen Fluids räumlich begrenzt verändert.

Das rheologische Ventil kann bevorzugt schnell ansprechen, beispielsweise innerhalb weniger Millisekunden. Beispielsweise kann das rheologische Ventil innerhalb von 1 ms bis 100 ms geöffnet und/oder geschlossen werden, bevorzugt kann das rheologische Ventil innerhalb von 1 ms bis 50 ms geöffnet und/oder geschlossen werden, besonders bevorzugt kann das rheologische Ventil innerhalb von 1 ms bis 10 ms geöffnet und/oder geschlossen werden.

Das rheologische Ventil kann beispielsweise zwischen zwei Zuständen beschaltbar sein, insbesondere mittels einer digitalen Ansteuerung, beispielsweise zwischen einem geöffneten Zustand und einem geschlossenen Zustand. Während des geöffneten Zustands kann das rheologisches Fluid vorzugsweise ungehindert das rheologische Ventil passieren. Während des geschlossenen Zustands kann rheologisches Fluid vorzugsweise das rheologische Ventil nicht passieren. Alternativ hierzu kann das rheologische Ventil beispielsweise kontinuierlich zwischen dem geöffneten Zustand und dem geschlossenen Zustand beschaltbar sein, beispielsweise mittels einer analogen Ansteuerung und/oder mittels einer Pulsweitenmodulation, beispielsweise zu einem beliebigen Drosseln eines Fluiddrucks und/oder eines Fluidvolumenstroms durch das rheologische Ventil.

Das rheologische Ventil kann beispielsweise ein aus dem Stand der Technik bekanntes Ventil sein, beispielsweise ein Ventil der Firma Fludicon GmbH, wie beispielsweise in DE 10 2013 000 978 B3 beschrieben.

Beispielsweise kann der rheologische Aktuator mindestens einen Zylinderantrieb aufweisen.

Der rheologische Aktuator und/oder das Getriebe können bevorzugt kein mechanisches Ventil aufweisen. Unter dem Ausdruck "mechanisches Ventil" kann ein Ventil verstanden werden, welches die Fließeigenschaft des rheologischen Fluids nicht beeinflusst, zumindest nicht durch eine Änderung einer der oben genannten physikalischen Größen. Ein mechanisches Ventil kann eine Vorrichtung sein, welche durch eine Änderung einer Geometrie des Ventils mindestens einen Volumenstrom und/oder mindestens einen Druck ändern kann. Alternativ hierzu können der rheologische Aktuator und/oder das Getriebe mindestens ein mechanisches Ventil aufweisen.

Das rheologische Fluid kann beispielsweise mindestens ein elektrorheologisches Fluid und/oder mindestens ein magnetorheologisches Fluid aufweisen. Das elektrorheologische Fluid kann beispielsweise ein Fluid sein, dessen Fließeigenschaft durch Änderung eines elektrischen Feldes, beispielsweise einer elektrischen Feldstärke und/oder einer Frequenz eines elektrischen Wechselfeldes und/oder einer Amplitude eines elektrischen Wechselfeldes, beeinflusst werden kann. Das elektrorheologische Fluid kann bevorzugt polarisierbare Partikel aufweisen. Bei Beaufschlagung des elektrorheologischen Fluids mit einem elektrischen Feld, bevorzugt mit einem starken elektrischen Feld, kann bevorzugt eine Polarisation dieser Partikel stattfinden. Durch die Polarisation der Partikel kann sich die Fließeigenschaft verändern. Beispielsweise können sich das elektrorheologische Fluid und/oder ein dem elektrischen Feld ausgesetzter, beispielsweise räumlich beschränkter, Teil des elektrorheologischen Fluids bei Anlegen des elektrischen Feldes von einer newtonschen Flüssigkeit zu einem plastischen Körper umwandeln. Beispielsweise kann sich das elektrorheologische Fluid unterhalb eines Schwellwerts für eine elektrische Feldstärke wie eine Flüssigkeit verhalten und oberhalb des Schwellwerts für die elektrische Feldstärke wie ein Festkörper.

Das magnetorheologische Fluid kann beispielsweise ein Fluid sein, dessen Fließeigenschaft durch Änderung eines magnetischen Feldes, beispielsweise einer magnetischen Feldstärke und/oder einer Frequenz eines magnetischen Wechselfeldes und/oder einer Amplitude eines magnetischen Wechselfeldes, beeinflusst werden kann.

Das rheologische Ventil ist gemäß der vorliegenden Erfindung innerhalb des rheologischen Aktuators angeordnet. Zudem ist das rheologische Ventil eingerichtet um das rheologische Fluid einem jeweiligen Verbraucher zuzuordnen.

Gemäß der vorliegenden Erfindung ist mindestens ein rheologisches Ventil, bevorzugt mehrere rheologische Ventile, derart in dem rheologischen Aktuator angeordnet, dass das rheologische Fluid, durch zumindest teilweises Öffnen oder Schließer des mindestens einen rheologischen Ventils zwischen unterschiedlichen Verbrauchern aufgeteilt wird.

Bei dem Verbraucher kann es sich beispielsweise um mindestens eine Kupplung, bevorzugt um eine erste Kupplung und/oder eine zweite Kupplung, und/oder mindestens eine Schaltanordnung, beispielsweise mindestens eine Schaltmuffe, und/oder mindestens eine Parksperre handeln.

Beispielsweise kann das rheologische Ventil derart innerhalb des rheologischen Aktuators angeordnet sein, dass das rheologische Ventil einem jeweiligen Verbraucher einen Pumpendruck zuordnet.

Unter dem Ausdruck "einem jeweiligen Verbraucher zuordnen" kann beispielsweise verstanden werden, dass zumindest ein jeweiliger Verbraucher mit rheologischem Fluid beaufschlagt wird, vorzugsweise geregelt.

Beispielsweise kann das rheologische Ventil derart innerhalb des rheologischen Aktuators angeordnet sein, dass das rheologische Ventil einen Verbraucher aktuiert. Beispielsweise kann mindestens ein rheologisches Ventil derart innerhalb des rheologischen Aktuators angeordnet sein, dass mindestens eine Kupplung, beispielsweise die erste Kupplung und/oder die zweite Kupplung, von einem offenen Zustand in einen geschlossenen Zustand überführt und/oder von einem geschlossenen Zustand in einen offenen Zustand überführt werden kann, insbesondere durch ein Öffnen und/oder durch ein Schließen des rheologischen Ventils.

Alternativ oder zusätzlich können mindestens ein, bevorzugt vier rheologische Ventile, derart innerhalb des rheologischen Aktuators angeordnet sein, dass eine Schaltanordnung von einem eingelegten Zustand eines Ganges in einen ausgelegten Zustand eines Ganges überführt werden kann, insbesondere durch ein Schließen jeweils zweier rheologischer Ventile und/oder durch ein Öffnen jeweils zweier rheologischer Ventile.

Alternativ oder zusätzlich kann mindestens ein rheologisches Ventil derart innerhalb des rheologischen Aktuators angeordnet sein, dass die Parksperre von einem offenen Zustand in einen geschlossenen Zustand überführt und/oder von einem geschlossenen Zustand in einen offenen Zustand überführt werden kann, insbesondere durch ein Öffnen und/oder durch ein Schließen zumindest eines rheologischen Ventils.

Das rheologische Ventil oder mehrere rheologische Ventile können bevorzugt derart innerhalb des rheologischen Aktuators angeordnet sein, dass das rheologische Ventil einen Pumpendruck mindestens einem jeweiligen Verbraucher diskret, insbesondere durch einen geöffneten und/oder einen geschlossenen Zustand des rheologischen Ventils, und/oder kontinuierlich, insbesondere über einen kontinuierlichen Bereich zwischen einem vollständig geschlossenen Zustand des Ventils und einem vollständig geöffneten Zustand des Ventils, zuordnet.

Beispielsweise kann der rheologische Aktuator derart eingerichtet sein, dass durch ein Öffnen und/oder durch ein Schließen mindestens eines rheologischen Ventils mindestens eine Kupplung geöffnet und/oder geschlossen werden kann. Alternativ oder zusätzlich kann der rheologische Aktuator eingerichtet sein, um durch ein Öffnen und/oder durch ein Schließen mindestens eines rheologischen Ventils, bevorzugt zweier rheologischer Ventile, ein Gang eingelegt und/oder ein Gang ausgelegt werden kann. Alternativ oder zusätzlich kann der rheologische Aktuator eingerichtet sein, um durch ein Öffnen und/oder durch ein Schließen mindestens eines rheologischen Ventils die Parksperre zu schließen und/oder die Parksperre zu öffnen.

Das rheologisches Ventil kann beispielsweise ein elektrorheologisches Ventil, umfassend insbesondere mindestens zwei Elektroden, und/oder ein magnetorheologisches Ventil sein. Bei Verwendung des elektrorheologischen Fluids kann der rheologische Aktuator bevorzugt mindestens ein elektrorheologisches Ventil aufweisen. Bei Verwendung des magnetorheologischen Fluids kann der rheologische Aktuator bevorzugt mindestens ein magnetorheologisches Ventil aufweisen. Das elektrorheologische Ventil kann beispielsweise eingerichtet sein, um die physikalische Größe, beispielsweise die elektrische Feldstärke und/oder die Frequenz des elektrischen Wechselfeldes und/oder die Amplitude des elektrischen Wechselfeldes, vorzugsweise räumlich begrenzt, zu verändern, insbesondere derart, dass sich die Fließeigenschaft des rheologischen Fluids verändert, insbesondere räumlich begrenzt. Das elektrorheologische Ventil kann bevorzugt mindestens zwei Elektroden umfassen. Bevorzugt können die zwei Elektroden derart eingerichtet sein, dass zwischen den zwei Elektroden ein elektrisches Feld, beispielsweise ein konstantes elektrisches Feld und/oder ein elektrisches Wechselfeld anliegen kann. Bei dem elektrischen Wechselfeld kann es sich beispielsweise um ein periodisches Wechselfeld handeln. Bevorzugt kann es sich bei dem elektrischen Wechselfeld um ein aperiodisches Wechselfeld handeln. Das elektrische Wechselfeld kann beispielsweise eine Pulssequenz umfassen, insbesondere eine Pulssequenz, welche entsprechend der Fahrsituationen ausgestaltet sein kann. Die Pulssequenz kann beispielsweise von einer Ansteuerung generiert werden und/oder vorgegeben sein. Beispielsweise können das elektrische Wechselfeld und/oder die Pulssequenz mindestens ein sinusförmiges und/oder mindestens ein sägezahnförmiges und/oder mindestens ein stufenförmiges Wechselfeld aufweisen. Bevorzugt kann das elektrische Feld, beispielsweise die Pulssequenz, zwischen mindestens zwei verschiedenen Zuständen geregelt beschaltbar sein, beispielsweise zwischen einem Zustand in welchem das rheologische Fluid zumindest räumlich begrenzt einen Volumenstrom von null aufweist und einem Zustand, bei welchem der Volumenstrom einen Wert ungleich null aufweist. Das elektrorheologische Ventil kann beispielsweise mindestens einen Kondensator aufweisen, wobei der Kondensator mindestens zwei Elektroden aufweist, wobei zwischen den beiden Elektroden bevorzugt eine Leitung mit dem rheologischen Fluid, bevorzugt mit dem elektrorheologischen Fluid, verläuft. Der Kondensator kann beispielsweise ein Plattenkondensator sein. Alternativ hierzu kann der Kondensator ein Zylinderkondensator sein.

Das magnetorheologische Ventil kann beispielsweise eingerichtet sein, um die magnetische Feldstärke und/oder die Frequenz des magnetischen Wechselfeldes und/oder die Amplitude des magnetischen Wechselfeldes, vorzugsweise räumlich begrenzt, zu verändern, insbesondere derart, dass sich die Fließeigenschaft des rheologischen Fluids verändert, insbesondere räumlich begrenzt. Das magnetorheologische Ventil kann beispielsweise mindestens eine Leiterschleife und/oder mindestens eine Spule, beispielsweise eine Spule mit einem ferromagnetischen Kern oder eine Spule ohne Kern, und/oder mindestens einen Permanentmagneten, insbesondere einen Permanentmagneten dessen Position veränderbar ist, umfassen. Bevorzugt kann die Spule derart ausgestaltet sein, dass in der Spule ein magnetisches Feld generiert werden kann, beispielsweise ein konstantes magnetisches Feld und/oder ein magnetisches Wechselfeld. Bei dem magnetischen Wechselfeld kann es sich beispielsweise um ein periodisches Wechselfeld und/oder um ein aperiodisches Wechselfeld, beispielsweise um eine Pulssequenz, handeln. Die Pulssequenz kann beispielsweise entsprechend einer Fahrsituation ausgestaltet sein. Die Pulssequenz kann beispielsweise von der Ansteuerung vorgegeben sein und/oder generierbar sein. Beispielsweise kann das magnetische Wechselfeld, insbesondere die Pulssequenz, mindestens ein sinusförmiges und/oder mindestens ein sägezahnförmiges und/oder mindestens ein stufenförmiges Wechselfeld aufweisen. Bevorzugt kann das magnetische Feld zwischen mindestens zwei verschiedenen Zuständen geregelt beschaltbar sein, beispielsweise zwischen einem Zustand in welchem das rheologische Fluid, bevorzugt das magnetorheologische Fluid, zumindest räumlich begrenzt, einen Volumenstrom von null aufweist und einem Zustand, bei welchem der Volumenstrom einen Wert ungleich null aufweist. Bevorzugt kann das magnetorheologische Ventil zeitlich beliebig beschaltbar sein.

Alternativ oder zusätzlich kann das rheologische Ventil eine Quelle für elektromagnetische Strahlung aufweisen, beispielsweise mindestens eine Antenne und/oder mindestens eine Lichtquelle, beispielsweise mindestens eine Diode, insbesondere mindestens eine Laserdiode.

Beispielsweise kann das rheologische Ventil mindestens ein Peltier-Element aufweisen, insbesondere um die Temperatur des rheologischen Fluids und/oder eines räumlich begrenzten Teils des rheologischen Fluids zu verändern. Beispielsweise kann durch eine Änderung der Temperatur an dem rheologischen Ventil die Fließeigenschaft des rheologischen Ventils lokal verändert werden, insbesondere derart, dass das rheologische Ventil von einem sperrenden Zustand in einen durchfließbaren Zustand beschaltbar sein kann.

Der rheologische Aktuator kann mindestens einen Fluidsumpf und/oder mindestens einen Filter, beispielsweise mindestens einen Saugfilter und/oder mindestens einen Druckfilter, und/oder mindestens einen Elektromotor und/oder mindestens eine Pumpe und/oder mindestens einen Sensor, beispielsweise mindestens einen Drucksensor und/oder mindestens einen Temperatursensor, und/oder mindestens eine Blende, insbesondere mindestens eine regelbare Blende, und/oder mindestens eine Fluidrückführung aufweisen.

Die regelbare Blende kann beispielsweise ein oben beschriebenes rheologisches Ventil aufweisen oder ein oben beschriebenes rheologisches Ventil sein, welches beispielsweise kontinuierlich zwischen dem geöffneten Zustand und dem geschlossenen Zustand beschaltbar sein kann, beispielsweise mittels der analogen Ansteuerung und/oder mittels der Pulsweitenmodulation, beispielsweise zu einem beliebigen Drosseln des Fluiddrucks und/oder des Fluidvolumenstrom.

Alternativ oder zusätzlich kann die regelbare Blende beispielsweise ein oben beschriebenes rheologisches Ventil aufweisen oder ein oben beschriebenes rheologisches Ventil sein, welches zwischen den oben beschriebenen zwei Zuständen beschaltbar sein kann, insbesondere mittels der digitalen Ansteuerung, beispielsweise zwischen dem geöffneten Zustand und dem geschlossenen Zustand, also einem verschwindenden Fluidvolumenstrom.

Bei dem Fluidsumpf kann es sich beispielsweise um einen Ölsumpf handeln. Der Fluidsumpf kann eine Vorrichtung sein, welche eingerichtet ist, um das rheologische Fluid, insbesondere Öl, und/oder mindestens ein zweites Fluid aufzunehmen. Der Fluidsumpf kann beispielsweise derart ausgestaltet sein, dass er rheologisches Fluid und/oder das zweite Fluid derart aufnimmt, dass Zahnräder des Getriebes mit dem rheologischen Fluid und/oder mit dem zweiten Fluid beaufschlagt werden können, beispielsweise zum Kühlen und/oder zum Schmieren. Das zweite Fluid kann beispielsweise ein übliches Getriebeöl sein. Beispielsweise kann das rheologische Fluid zu einer Steuerung und/oder Aktuierung verwendet werden. Das zweite Fluid kann beispielsweise vorzugsweise zu einer Schmierung und/oder zu einer Kühlung verwendet werden.

Bei dem Fluidsumpf kann es sich bevorzugt um einen Getriebesumpf handeln. Der Fluidsumpf kann beispielsweise mindestens einen Behälter und/oder mindestens einen Hohlraum in dem Getriebe umfassen, vorzugsweise in einem unteren Teil des Getriebes, in welchem sich aufgrund einer Gravitationskraft und/oder einer Zentrifugalkraft das rheologische Fluid und/oder das zweite Fluid, insbesondere das Öl, sammeln kann, beispielsweise in einem Ruhezustand des Getriebes. Der Fluidsumpf kann mindestens einen Tank umfassen. Beispielsweise kann der Fluidsumpf mindestens einen ersten Tank und mindestens einen zweiten Tank aufweisen. Beispielsweise kann der erste Tank eingerichtet sein um das rheologische Fluid, bevorzugt für den rheologischen Aktuator, bereitzustellen. Der zweite Tank kann beispielsweise eingerichtet sein um das zweite Fluid bereitzustellen, insbesondere zum Schmieren und/oder zum Kühlen, beispielsweise der Zahnräder und/oder der Wellen und/oder der Lager.

Der Filter kann beispielsweise ein Druckfilter und/oder ein Saugfilter sein. Der Filter kann beispielsweise eingerichtet sein, um eine Verunreinigung des rheologischen Fluids zu verhindern und/oder zu mildern. Der Saugfilter kann beispielsweise vor der Pumpe angeordnet sein. Der Saugfilter kann insbesondere eingerichtet sein um angesaugtes rheologisches Fluid zu filtern. Der Druckfilter kann bevorzugt hinter der Pumpe angeordnet sein. Der Druckfilter kann beispielsweise eingerichtet sein um die Blende vor Schmutz zu schützen. Der Druckfilter kann beispielsweise vor der Blende angeordnet sein. Alternativ hierzu kann der Druckfilter auch nach der Blende angeordnet sein.

Der Elektromotor kann bevorzugt eingerichtet sein, um die Pumpe zu betreiben. Der Elektromotor kann beispielsweise mindestens einen Stator und/oder mindestens einen Rotor und/oder mindestens eine E-Motorwelle aufweisen.

Die Pumpe kann beispielsweise eine Vorrichtung sein, welche eingerichtet ist, um elektrische Energie in mechanische Energie, bevorzugt in hydraulische Energie, umzuwandeln. Die Pumpe kann eingerichtet sein um das rheologische Fluid mit einem Druck und/oder einem Volumenstrom zu beaufschlagen. Die Pumpe kann mindestens einen Außenrotor und/oder mindestens einen Innenrotor aufweisen. Die Pumpe kann beispielsweise eine Gerotorpumpe sein. Die Pumpe kann beispielsweise eine unidirektionale Pumpe sein. Alternativ hierzu kann die Pumpe eine bidirektionale Pumpe sein. Die bidirektionale Pumpe kann in mindestens einer Pumprichtung und in mindestens einer Saugrichtung betreibbar sein. Die Pumprichtung kann beispielsweise von der Pumpe zu einem Verbraucher zeigen. Der Verbraucher kann beispielsweise eine Kupplung und/oder eine Schaltanordnung und/oder eine Parksperre sein. Die Saugrichtung kann bevorzugt entgegengesetzt zu der Pumprichtung sein, insbesondere von der Pumpe in Richtung des Fluidsumpfes und/oder in Richtung des Saugfilters.

In dem rheologischen Aktuator können mindestens ein Sensor, insbesondere mindestens ein Drucksensor und/oder mindestens ein Temperatursensor, integriert sein. Bei dem Sensor kann es sich prinzipiell um eine beliebige Vorrichtung handeln, welche eingerichtet ist um mindestens eine physikalische Größe, beispielsweise mindestens eine physikalische Größe des Fluids, zu erfassen. Die physikalische Größe kann beispielsweise ausgewählt sein aus einem Druck des Fluids und/oder einer Druckdifferenz des Fluids; einer Temperatur, beispielsweise einer Temperatur des Fluids; einer Zähigkeit, beispielsweise einer Zähigkeit des Fluids; einem Volumenstrom; einer Fließgeschwindigkeit; einer Rotationsgeschwindigkeit der Pumpe, einer Drehfrequenz der Pumpe; und einer Position einer Welle, beispielsweise eine Position einer Welle der Pumpe. Der Sensor kann beispielweise ein Inkrementalsensor sein. Der Sensor kann beispielsweise eingerichtet sein, um eine Ansteuerung des rheologischen Aktuators zu ermöglichen und/oder zu verbessern. Der Temperatursensor kann beispielsweise eingerichtet sein um eine

Temperatur des rheologischen Fluids, beispielsweise eines einströmenden Fluidstroms an rheologischem Fluid, zu erfassen. Beispielsweise kann bei einer bekannten Temperatur des rheologischen Fluids, beispielsweise des strömenden Fluidstroms, ein Druck des rheologischen Fluids besser kontrolliert und/oder geregelt werden. Bevorzugt kann der Temperatursensor an einem Sauganschluss und/oder an einem Druckanschluss der Pumpe angeordnet sein und/oder eingerichtet sein, beispielsweise um die Temperatur des rheologischen Fluids an dem Sauganschluss und/oder an dem Druckanschluss zu erfassen.

Die Blende kann beispielsweise mindestens eine Leckagefunktion und/oder mindestens eine Fluidrückführfunktion und/oder mindestens eine Druckabfallfunktion und/oder mindestens eine Druckaufrechterhaltungsfunktion aufweisen. Die Blende kann beispielsweise eine regelbare Blende sein. Die Blende kann beispielsweise mindestens ein rheologisches Ventil, wie oben beschrieben, aufweisen. Das rheologische Ventil der Blende kann vorzugsweise in einem kontinuierlichen Bereich betreibbar sein, insbesondere zwischen einem von einem Durchmesser der Blende abhängigen maximalen Fluidvolumenstrom und einem verschwindenden Fluidvolumenstrom. Beispielsweise kann die Blende das rheologische Ventil sein.

Die Blende kann beispielsweise eingerichtet sein, um in mindestens einem Betriebsmodus der Blende, beispielsweise in einem Leckagebetriebsmodus der Blende, einen kontinuierlichen Durchfluss an rheologischem Fluid durch zumindest einen Teil des rheologischen Aktuators, beispielsweise durch die Pumpe, zu ermöglichen und/oder zu garantieren, zumindest sofern die Pumpe in Betrieb ist. Die Blende kann beispielsweise derart eingerichtet sein, dass während eines Leckagebetriebsmodus der Blende bei einem Fluiddruck ungleich Null stets ein, vorzugsweise kontinuierlicher, Fluidstrom, vorzugsweise durch die Pumpe, ermöglicht wird.

Die Blende kann insbesondere eingerichtet sein um den Verbraucher, beispielsweise die Kupplung und/oder die Schaltanordnung und/oder die Parksperre, geregelt mit rheologischem Fluid aus dem Fluidsumpf zu beaufschlagen und/oder geregelt nicht mit rheologischem Fluid zu beaufschlagen. Beispielsweise kann die Blende eingerichtet sein um einen Fluiddruck und/oder einen Fluidvolumenstrom zu regeln, vorzugsweise über einen kontinuierlichen Fluiddruckbereich und/oder über einen kontinuierlichen Fluidvolumenstrombereich. Die Blende kann beispielsweise insbesondere eine Kennlinie des rheologischem Aktuators hinsichtlich einer Regelbarkeit positiv beeinflussen. Die Kennlinie kann beispielsweise einen Zusammenhang zwischen einer Umdrehungsfrequenz der Pumpe und einem Druck an einer definierten Stelle des rheologischen Aktuators beschreiben.

Die Blende kann beispielsweise einen Fluidleitungsabschnitt mit einem verringerten Querschnitt umfassen. Die Blende kann beispielsweise einen Durchmesser von 0,1 mm bis 5 mm, bevorzugt von 0,5 mm bis 0,8 mm, besonders bevorzugt von 0,6 mm bis 0,75 mm aufweisen, beispielsweise je nach Anwendung. Bevorzugt kann die Blende mindestens ein rheologisches Ventil umfassen. Die Blende kann beispielsweise einen Leckagestrom und/oder einen Fluidrückführstrom geregelt zu dem Fluidsumpf leiten und/oder die Blende kann, bevorzugt mittels des rheologischen Ventils, einen Volumenstrom des Leckagestroms und/oder einen Volumenstrom des Fluidrückführstroms geregelt verringern und/oder geregelt verhindern.

Die Fluidrückführung kann beispielsweise eingerichtet sein, um das rheologische Fluid zu dem Fluidsumpf zu führen. Die Fluidrückführung kann beispielsweise mindestens ein rheologisches Ventil aufweisen.

Die Blende kann vorzugsweise verschließbar sein, beispielsweise durch das rheologische Ventil.

Das Getriebe kann mindestens einen Verbraucher aufweisen, beispielsweise einen Verbraucher wie oben beschrieben. Bevorzugt kann das Getriebe mindestens zwei Verbraucher aufweisen. Der rheologische Aktuator kann eingerichtet sein um den Verbraucher mit rheologischem Fluid zu beaufschlagen. Der Verbraucher kann beispielsweise eine Vorrichtung sein, welche mechanisch und/oder hydraulisch aktuierbar und/oder betätigbar ist.

Das Getriebe kann mindestens eine Kupplung aufweisen. Die Kupplung kann beispielsweise mindestens eine Trockenkupplung und/oder mindestens eine Nasskupplung aufweisen. Bei der Kupplung kann es sich beispielsweise um eine Vorrichtung handeln, welche eingerichtet ist um eine Kraftübertragung zwischen mindestens zwei Wellen reversibel zu ermöglichen. Unter dem Ausdruck"reversibel" kann verstanden werden, dass eine Kraftübertragung zwischen den zwei Wellen beliebig häufig ermöglicht und/oder verhindert werden kann, beispielsweise gesteuert durch einen Fahrer und/oder durch eine automatisierte Steuerung.

### Die Kupplung kann beispielsweise eine Doppelkupplung sein.

Der rheologische Aktuator kann beispielsweise eingerichtet sein um die Kupplung mit dem rheologischen Fluid zu beaufschlagen, bevorzugt zur Betätigung der Kupplung. Alternativ oder zusätzlich kann der rheologische Aktuator eine Vorrichtung sein, der eingerichtet ist, um die Kupplung zu Kühlen und/oder zu schmieren.

Der rheologische Aktuator kann beispielsweise eine Fluidbeaufschlagungsvorrichtung sein.

Der rheologische Aktuator kann beispielsweise mindestens einen Hydraulikregelkreis umfassen. Der rheologische Aktuator kann beispielsweise eingerichtet sein, um mindestens einen Verbraucher, vorzugsweise mindestens zwei Verbraucher, des Getriebes mit dem rheologischen Fluid zu beaufschlagen, vorzugsweise geregelt zu beaufschlagen.

Unter dem Ausdruck "beaufschlagen" kann im Rahmen der vorliegenden Erfindung beispielsweise eine Versorgung mit dem rheologischen Fluid, insbesondere zum Kühlen und/oder zum Schmieren und/oder zu einer hydraulischen Steuerung, insbesondere zum Aktuieren, verstanden werden. Unter dem Ausdruck "geregelt" kann im Rahmen der vorliegenden Erfindung beispielsweise verstanden werden, dass mindestens ein Fluiddruck und/oder mindestens ein Fluidvolumenstrom definiert eingestellt und/oder verändert werden kann.

Das Getriebe kann beispielsweise mindestens eine Schaltanordnung aufweisen. Die Schaltanordnung kann beispielsweise eine Vorrichtung sein, welche eingerichtet ist um zwischen verschiedenen Gängen des Getriebes zu schalten. Die Schaltanordnung kann beispielsweise mindestens ein Schaltelement und mindestens ein Schaltglied, beispielsweise mindestens eine Schaltgabel, aufweisen. Das Schaltelement kann beispielsweise mit dem Schaltglied, insbesondere mit der Schaltgabel, verbindbar sein oder verbunden sein. Das Schaltglied kann beispielsweise mindestens eine Schaltmuffe aufweisen. Bevorzugt kann das Schaltelement mehrere Schaltgabeln und/oder mehrere Schaltmuffen aufweisen. Beispielsweise kann die Schaltgabel eingerichtet sein, um die Schaltmuffe zu verschieben, insbesondere zum Einlegen eines Gangs.

Der rheologische Aktuator kann eingerichtet sein um die Schaltanordnung mit dem rheologischen Fluid zu beaufschlagen, bevorzugt zur Betätigung der Schaltanordnung, beispielsweise zur Betätigung der Schaltgabeln und/oder der Schaltmuffen.

Das Getriebe, insbesondere die Schaltanordnung, kann mindestens eine Schaltmuffe aufweisen. Der rheologische Aktuator kann für jede Schaltmuffe mindestens eine Fluidrückführung, bevorzugt zwei Fluidrückführungen, mit jeweils mindestens einem rheologischen Ventil und/oder mindestens eine Verbraucherleitung, bevorzugt zwei Verbraucherleitungen, mit jeweils mindestens einem rheologischen Ventil aufweisen.

Die Schaltmuffe kann eine Vorrichtung sein, welche eingerichtet ist, um einen Gang des Getriebes einzulegen, insbesondere durch Herstellung einer formschlüssigen Verbindung zwischen einer Welle und einem Zahnrad. Eine Schaltmuffe kann beispielsweise für mindestens zwei Gänge zuständig sein. Beispielsweise kann eine Schaltmuffe in einem Getriebe einen Zustand in einer Mittelstellung aufweisen, insbesondere ohne formschlüssige Verbindung zwischen der Welle und einem Zahnrad. Weiterhin kann die Schaltmuffe einen Zustand in einer ersten Stellung einnehmen, bei welcher eine formschlüssige Verbindung zwischen der Welle und einem ersten Zahnrad vorliegen kann.

Weiterhin kann die Schaltmuffe einen Zustand in einer zweiten Stellung einnehmen, bei welcher eine formschlüssige Verbindung zwischen der Welle und einem zweiten Zahnrad vorliegen kann. Die Schaltanordnung kann bevorzugt derart eingerichtet sein, dass bei einem Zustand der Schaltmuffe in der Mittelstellung durch diese Schaltmuffe kein Gang eingelegt ist und durch einen Zustand der Schaltmuffe in der ersten Stellung ein vorbestimmter Gang durch diese Schaltmuffe eingelegt ist und bei einem Zustand der Schaltmuffe in der zweiten Stellung durch diese Schaltmuffe ein anderer vorbestimmter Gang eingelegt ist.

Ein rheologisches Ventil in einer Fluidrückführung der Schaltmuffe kann eingerichtet sein, um rheologisches Fluid in den Fluidsumpf abzulassen. Ein rheologisches Ventil in einer Verbraucherleitung der Schaltmuffe kann eingerichtet sein, um einen Kolben der Schaltmuffe mit rheologischem Fluid, insbesondere mit Pumpendruck, zu beaufschlagen.

Beispielsweise kann der rheologische Aktuator an einer Schaltmuffe eine erste Verbraucherleitung mit einem ersten rheologischen Ventil und eine zweite Verbraucherleitung mit einem zweiten rheologischen Ventil und eine erste Fluidrückführung mit einem dritten rheologischen Ventil und eine zweite Fluidrückführung mit einem vierten rheologischen Ventil aufweisen.

Die rheologischen Ventile der Verbraucherleitungen, insbesondere der ersten Verbraucherleitung und der zweiten Verbraucherleitung, können insbesondere eingerichtet sein, um einen Kolben der Schaltmuffe derart mit rheologischem Fluid zu beaufschlagen, dass dieser sich bewegt. Die rheologischen Ventile der Fluidrückführungen, insbesondere der ersten Fluidrückführung und der zweiten Fluidrückführung, können insbesondere eingerichtet sein, um in einem geöffneten Zustand des dritten rheologischen Ventils und/oder des vierten rheologischen Fluids, rheologisches Fluid in den Fluidsumpf abzulassen und in einem geschlossenen Zustand einen Fluiddruck an dem jeweiligen Kolben zu halten.

Um die Schaltmuffe in die erste Stellung zu bringen und/oder in der ersten Stellung zu halten, können beispielsweise insbesondere das erste rheologische Ventil und das vierte rheologische Ventil geschlossen sein und das zweite rheologische Ventil und das dritte rheologische Ventil geöffnet sein.

Um die Schaltmuffe in die zweite Stellung zu bringen und/oder in der zweiten Stellung zu halten können beispielsweise insbesondere das zweite rheologische Ventil und das dritte rheologische Ventil geschlossen sein und das erste rheologische Ventil und das vierte rheologische Ventil geöffnet sein.

Die Schaltmuffe kann bevorzugt ohne zusätzliche Rastiervorrichtung in der Mittelstellung und/oder in der ersten Stellung und/oder in der zweiten Stellung gehalten werden.

Die Ausdrücke "Erste" und "zweite" und "dritte" und "vierte" werden hierbei als Bezeichnungen verwendet ohne Hinweis auf eine Gesamtanzahl oder auf eine Reihenfolge der genannten Elemente.

Das Getriebe kann beispielsweise mindestens eine Parksperre aufweisen. Der rheologische Aktuator kann beispielsweise eingerichtet sein um die Parksperre mit dem rheologischen Fluid zu beaufschlagen, bevorzugt zur Betätigung der Parksperre. Unter der Parksperre kann eine Vorrichtung verstanden werden, welche eingerichtet ist, um das Kraftfahrzeug bei Bedarf zu immobilisieren. Die Parksperre kann mindestens ein zu einer Kraftübertragung von der Getriebeeingangswelle zu der Getriebeausgangswelle dienendes Rad, vorzugsweise ein Parksperrenrad, aufweisen. Das Rad, bevorzugt das Parksperrenrad, kann bevorzugt zwangsläufig mit einer Getriebeausgangswelle gekoppelt sein. Die Parksperre kann insbesondere dazu ausgelegt sein, das Rad, bevorzugt das Parksperrenrad, formschlüssig mit dem Getriebegehäuse zu verbinden, um bei Bedarf das Kraftfahrzeug zu immobilisieren. Der rheologische Aktuator kann ausgelegt sein um das Rad formschlüssig mit dem Getriebegehäuse zu verbinden.

Bevorzugt können das elektrorheologische Fluid und/oder das magnetorheologische Fluid als Fluid für eine Schaltungsaktuatorik und/oder für eine Kupplungsaktuatorik einsetzbar sein.

Das Getriebe kann mindestens einen weiteren Verbraucher aufweisen. Der rheologische Aktuator kann eingerichtet sein um den weiteren Verbraucher mit rheologischem Fluid zu beaufschlagen, beispielsweise zu einer mechanischen Betätigung und/oder zu einer Kühlung und/oder zu einer Schmierung.

Das Getriebe kann bevorzugt genau einen rheologischen Aktuator aufweisen. Der rheologische Aktuator kann bevorzugt genau eine Pumpe und genau einen Elektromotor aufweisen.

Das Getriebe kann bevorzugt mindestens zwei rheologische Ventile aufweisen.

Beispielsweise kann das Getriebe genau einen rheologischen Aktuator mit genau einer Pumpe und mindestens zwei rheologischen Ventilen aufweisen.

Der rheologische Aktuator kann eingerichtet sein um mindestens die Kupplung, bevorzugt zwei Kupplungen, und/oder mindestens die Schaltanordnung und/oder mindestens die Parksperre zu betätigen, bevorzugt mittels nur einer Pumpe und/oder mittels nur eines Elektromotors.

Das Getriebe kann bevorzugt mindestens zwei Kupplungen aufweisen. Beispielsweise kann das Getriebe mindestens eine Doppelkupplung aufweisen.

Das Getriebe kann bevorzugt genau eine Pumpe zur Aktuierung der mindestens zwei Kupplungen und/oder der Schaltanordnung und/oder der Parksperre aufweisen.

Das Getriebe kann bevorzugt genau einen rheologischen Aktuator aufweisen. Der ideologische Aktuator kann mindestens eine Pumpe, bevorzugt genau eine Pumpe, aufweisen.

Die Pumpe kann bevorzugt eine bidirektionale Pumpe sein.

Die Pumpe kann beispielsweise insbesondere in eine Richtung betrieben werden um mindestens eine Kupplung und/oder die Schaltanordnung und/oder die Parksperre mit rheologischem Fluid, insbesondere mit Pumpendruck, zu beaufschlagen. Die Pumpe kann bevorzugt in einer hierzu entgegengesetzten Richtung betrieben werden, um einen Pumpendruck an mindestens einer Kupplung und/oder an der Parksperre und/oder an der Schaltanordnung zu senken, möglichst innerhalb nur kurzer Zeit. Die Pumpe kann insbesondere zu einer Notentleerung in der entgegengesetzten Richtung betrieben werden.

Das rheologische Ventil kann beispielsweise zwischen der Pumpe und mindestens einem Verbraucher angeordnet sein, bevorzugt zwischen der Pumpe und mindestens einer Kupplung und/oder zwischen der Pumpe und mindestens einer Schaltanordnung und/oder zwischen der Pumpe und der Parksperre. Unter dem Ausdruck"zwischen der Pumpe und mindestens einem Verbraucher" kann insbesondere eine Positionierung innerhalb einer Fluidleitung zwischen der Pumpe und dem Verbraucher, beispielsweise einer Kupplung und/oder der Parksperre und/oder der Schaltanordnung verstanden werden. Bevorzugt kann unter dem Ausdruck "zwischen der Pumpe und mindestens einem Verbraucher" insbesondere eine Positionierung innerhalb einer direkten fluidischen Verbindung zwischen der Pumpe und dem Verbraucher, beispielsweise einer Kupplung und/oder der Parksperre und/oder der Schaltanordnung verstanden werden.

Das rheologische Ventil kann bevorzugt derart angeordnet sein, dass rheologisches Fluid bei zumindest teilweise geöffnetem rheologischen Ventil von der Pumpe durch das rheologische Ventil zu dem Verbraucher gelangen kann, beispielsweise zu der Kupplung und/oder zu der Schaltanordnung und/oder zu der Parksperre, besonders bevorzugt auf direktem Wege.

Das Getriebe kann mindestens zwei rheologische Ventile aufweisen. Mindestens ein rheologisches Ventil kann zwischen der Pumpe und der Schaltanordnung angeordnet sein und mindestens ein weiteres rheologisches Ventil kann zwischen der Pumpe und der Kupplung angeordnet sein.

Bevorzugt kann der Filter, insbesondere der Saugfilter, zwischen dem Fluidsumpf und der Pumpe, insbesondere der bidirektionalen Pumpe, angeordnet sein. Die Pumpe kann bevorzugt durch den Elektromotor betreibbar sein.

In der Pumprichtung der Pumpe kann bevorzugt der Filter, insbesondere der Saugfilter, auf den Fluidsumpf folgen. Auf den Filter kann in Pumprichtung der Pumpe insbesondere die Pumpe folgen, welche bevorzugt durch den Elektromotor betrieben werden kann. An einer Stelle zwischen der Pumpe und einem der Verbraucher, beispielsweise der Kupplung und/oder der Doppelkupplung und/oder der Schaltanordnung und/oder der Parksperre, kann bevorzugt der Sensor, insbesondere der Drucksensor, angeordnet sein.

Der rheologische Aktuator kann mindestens eine Hauptleitung und/oder mindestens eine Leitungsabzweigung und/oder mindestens eine Verbraucherleitung und/oder mindestens eine Fluidrückführung und/oder mindestens eine Blendenleitung aufweisen. Die Hauptleitung kann eingerichtet sein, um rheologisches Fluid von dem Fluidsumpf zu den Leitungsabzweigungen zu leiten. An der Hauptleitung können beispielsweise der Filter, insbesondere der Saugfilter, und/oder die Pumpe und/oder der Sensor, beispielsweise der Drucksensor, angeordnet sein. Die Verbraucherleitung kann eingerichtet sein, um rheologisches Fluid von der Hauptleitung zu mindestens einem der Verbraucher und/oder zu einer Verbraucherleitung zu leiten. Die Verbraucherleitung kann bevorzugt von der Hauptleitung abzweigen, insbesondere an einer Leitungsabzweigung. Bevorzugt kann der rheologische Aktuator für jeden Verbraucher, beispielsweise für jede Kupplung und/oder für die Parksperre und/oder für die Schaltanordnung, mindestens eine oder genau eine Verbraucherleitung aufweisen.

Der rheologische Aktuator kann bevorzugt mindestens eine Verbraucherleitung und mindestens eine Blendenleitung aufweisen. Die Blendenleitung kann eingerichtet sein um rheologisches Fluid zu dem Fluidsumpf zu leiten. Das rheologische Ventil kann in einer Verbraucherleitung und/oder in einer Hauptleitung und/oder in einer parallel zu der Blendenleitung angeordneten Fluidrückführung angeordnet sein.

Das rheologische Ventil kann vor einer Leitungsabzweigung zu der Blendenleitung angeordnet sein.

Die Verbraucherleitung und/oder die Blendenleitung können bevorzugt mindestens ein rheologisches Ventil, wie oben beschrieben, aufweisen. Die Blendenleitung kann bevorzugt die Blende aufweisen. Die Blendenleitung kann eingerichtet sein um rheologisches Fluid zu dem Fluidsumpf zu leiten. Das rheologische Ventil in der Verbraucherleitung kann bevorzugt vor einer Leitungsabzweigung zu der Blendenleitung angeordnet sein. Unter dem Ausdruck "vor" kann im Rahmen der vorliegenden Erfindung insbesondere eine Positionierung näher an der Pumpe, insbesondere fluidisch näher an der Pumpe, verstanden werden. Unter dem Ausdruck "hinter" kann im Rahmen der vorliegenden Erfindung insbesondere eine weiter, insbesondere fluidisch weiter, von der Pumpe entferntere Positionierung verstanden werden. Eine Leitungsabzweigung der Blendenleitung von der Verbraucherleitung kann bevorzugt hinter der Leitungsabzweigung der Verbraucherleitung von der Hauptleitung angeordnet sein.

Die Blendenleitung kann beispielsweise die Blende, umfassend beispielsweise eine Verkleinerung eines Leitungsquerschnitts, und/oder mindestens ein rheologisches Ventil aufweisen. Die Blende und das rheologische Ventil können beispielsweise in einer Reihenschaltung angeordnet sein. Beispielsweise kann das rheologische Ventil hinter der Blende angeordnet sein.

Alternativ hierzu kann das rheologische Ventil vor der Blende angeordnet sein. Das rheologische Ventil kann beispielsweise zwischen den zwei Zuständen beschaltbar sein und/oder kann kontinuierlich zwischen den zwei Zuständen beschaltbar sein,
beispielsweise zwischen einem entsprechend des Blendendurchmessers maximalen und einem verschwindenden Fluidvolumenstrom.

Ein rheologisches Ventil der Blendenleitung kann vorzugsweise kontinuierlich zwischen einem entsprechend des Blendendurchmessers maximalen und einem verschwindenden Fluidvolumenstrom beschaltbar sein. rheologische Ventile in den Verbraucherleitungen und/oder von Fluidrückführungen und/oder der Schaltanordnung können beispielsweise nur zwischen einem offenen Zustand und einem geschlossenen Zustand, beispielsweise mittels einer digitalen Ansteuerung, betreibbar sein. rheologische Ventile der Schaltanordnung können vorzugsweise digital ansteuerbar sein.

Alternativ hierzu können beispielsweise alle rheologischen Ventile des Getriebes kontinuierlich beschaltbar sein, beispielsweise durch eine analoge Ansteuerung und/oder durch eine Pulsweitenmodulation.

Parallel zu der Blendenleitung kann beispielsweise eine Leitung, insbesondere eine Fluidrückführung, angeordnet sein, welche die Verbraucherleitung mit dem Fluidsumpf verbindet, bevorzugt steuerbar durch mindestens ein rheologisches Ventil. Diese Fluidrückführung kann beispielsweise eingerichtet sein, um, insbesondere in Kombination mit der Blendenleitung, die Verbraucherleitung zu der Kupplung möglichst schnell genug zu leeren, so dass die Kupplung schnell genug geöffnet werden kann.

Bevorzugt kann der rheologische Aktuator mindestens zwei Kupplungen beaufschlagen, insbesondere mit nur einer Pumpe. Beispielsweise kann der rheologische Aktuator für jede Kupplung jeweils mindestens eine Verbraucherleitung und/oder mindestens eine Blendenleitung mit jeweils mindestens einem rheologischen Ventil in der Verbraucherleitung und/oder mindestens einem rheologischen Ventil in der Blendenleitung und/oder mindestens einer Blende in der Blendenleitung aufweisen.

Beispielsweise kann der rheologische Aktuator zur Beaufschlagung der Schaltanordnung mit rheologischem Fluid mindestens eine Verbraucherleitung aufweisen. Der rheologische Aktuator kann für jede Schaltmuffe der Schaltanordnung beispielsweise mindestens eine Verbraucherleitung mit mindestens einem rheologischen Ventil aufweisen. Die Verbraucherleitungen zu den Schaltmuffen können beispielsweise aus jeweils einer Leitungsabzweigung aus der Hauptleitung abzweigen und/oder aus einer Leitungsabzweigung können mehrere Verbraucherleitungen abzweigen. Beispielsweise kann der rheologische Aktuator für jede Schaltmuffe mindestens eine, bevorzugt zwei, Fluidrückführungen mit jeweils mindestens einem rheologischen Ventil und/oder mindestens eine, bevorzugt zwei, Verbraucherleitungen mit jeweils mindestens einem rheologischen Ventil aufweisen. Zusätzlich kann der rheologische Aktuator für die Parksperre mindestens eine Verbraucherleitung aufweisen und/oder mindestens eine Fluidrückführung und/oder mindestens eine Blendenleitung. Bevorzugt kann die Leitungsabzweigung der Verbraucherleitung der Schaltanordnung von der Hauptleitung vor den Leitungsabzweigungen der Verbraucherleitungen der Kupplungen von der Hauptleitung angeordnet sein. Der Sensor, insbesondere der Drucksensor, kann bevorzugt zwischen der Leitungsabzweigung der Verbraucherleitung der Schaltanordnung von der Hauptleitung und/oder den Leitungsabzweigungen der Verbraucherleitungen der Kupplungen von der Hauptleitung angeordnet sein.

Das Getriebe kann mindestens eine Ansteuerung aufweisen. Die Ansteuerung kann mindestens eine Steuereinheit und/oder mindestens einen Kabelbaum und/oder mindestens eine Platine und/oder mindestens eine Schnittstelle und/oder mindestens einen Stecker und/oder mindestens eine Datenverarbeitungsvorrichtung umfassen. Die Ansteuerung kann über mindestens eine Schnittstelle mit dem rheologischen Aktuator, insbesondere mit der Pumpe und/oder mit dem rheologischen Ventil oder mit mindestens einem der rheologischen Ventile, verbunden sein. Die Ansteuerung kann beispielsweise eingerichtet sein um die rheologischen Ventile anzusteuern, beispielsweise je nach Fahrsituation.

Das Getriebe kann weiterhin mindestens ein Getriebegehäuse aufweisen.

In einem weiteren Aspekt der vorliegenden Erfindung wird ein Verfahren zum Betrieb des oben beschriebenen Getriebes vorgeschlagen.

Das Getriebe weist mindestens einen rheologischen Aktuator auf, insbesondere einen rheologischen Aktuator wie oben beschrieben. Der rheologische Aktuator weist mindestens ein rheologisches Fluid auf, beispielsweise wie oben beschrieben. Der rheologische Aktuator weist mindestens ein wie oben beschriebenes rheologisches Ventil auf. In dem Verfahren wird mittels des rheologischen Aktuators mindestens eine Kupplung, bevorzugt zwei Kupplungen, besonders bevorzugt die Doppelkupplung, und/oder mindestens eine Schaltanordnung und/oder mindestens eine Parksperre betätigt. Bevorzugt können die Kupplung und/oder die Doppelkupplung und/oder die Schaltanordnung und/oder die Parksperre mittels genau einer Pumpe und/oder mittels genau eines Elektromotors betätigt werden, beispielsweise zeitversetzt oder zumindest teilweise zeitlich überlappend. Das erfindungsgemäße Verfahren kann insbesondere mittels der oben beschriebenen Ansteuerung durchgeführt werden. Kupplungsvorgänge und/oder Schaltungsvorgänge können ausgeführt werden, insbesondere mittels des rheologischen Aktuators. Die Kupplungsvorgänge und/oder die Schaltungsvorgänge können beispielsweise nicht zeitgleich erfolgen. Alternativ oder zusätzlich können Kupplungsvorgänge der zwei Kupplungen zumindest teilweise gleichzeitig erfolgen.

Insbesondere können sich ein Kupplungsvorgang einer ersten Kupplung der zwei Kupplungen und ein Kupplungsvorgang einer zweiten Kupplung der zwei Kupplungen zumindest teilweise zeitlich überlappen, beispielsweise während einer Momentenübernahme und/oder während einer Überblendung, beispielsweise bei einer kommenden Kupplung und/oder bei einer gehenden Kupplung. Insbesondere kann eine Kupplung, beispielsweise die erste Kupplung, geöffnet werden währenddessen eine andere Kupplung, beispielsweise die zweite Kupplung, geschlossen werden kann.

Beispielsweise können zu einem Halten eines Fluiddrucks an einer Kupplung das rheologische Ventil der Verbraucherleitung zu der Kupplung und/oder das rheologische Ventil der Blendenleitung geschlossen werden, beispielsweise währenddessen eine andere Kupplung und/oder die Parksperre und/oder die Schaltanordnung betätigt werden. Um einen Druck an der Kupplung zu verringern kann beispielsweise bei geschlossenem rheologischen Ventil der Verbraucherleitung zu der Kupplung das rheologische Ventil der Blendenleitung der Kupplung zumindest teilweise geöffnet werden.

Beispielsweise können während einer bestimmten Betriebssituation, beispielsweise bei hohen Temperaturen, die rheologischen Ventile der Kupplung, insbesondere in der Verbraucherleitung zu der Kupplung und/oder in der Blendenleitung vor der Kupplung, geschlossen werden, beispielsweise um ein übertragbares Moment an der Kupplung zu erhöhen.

Beispielsweise können bei einem Schaltungsvorgang vorzugsweise alle rheologischen Ventile anderer Verbraucher, beispielsweise der zwei Kupplungen und/oder der Parksperre, geschlossen werden oder geschlossen sein, zumindest die rheologischen Ventile der Verbraucherleitungen der zwei Kupplungen und/oder der Verbraucherleitung der Parksperre, insbesondere um eine Beaufschlagung der Schaltanordnung mit dem rheologischen Fluid zu ermöglichen.

Beispielsweise kann zwischen dem Kupplungsvorgang und dem Schaltungsvorgang gewechselt werden.

Das oben beschriebene Getriebe und das oben beschriebene Verfahren weisen gegenüber bekannten Vorrichtungen zahlreiche Vorteile auf.

Beispielsweise können durch die Verwendung von rheologischem Fluid, insbesondere von elektrorheologischem Fluid, als Hydraulikmedium die Kupplung und/oder die Schaltanordnung und/oder die Parksperre mit nur einem rheologischen Aktuator, bevorzugt mit nur einer Energiequelle, insbesondere mit nur einer Pumpe und/oder mit nur einem Elektromotor, betätigt werden. Bevorzugt ergeben sich keine funktionalen Einschränkungen, beispielsweise hinsichtlich einer Schaltzeit und/oder einer Schaltreihenfolge.

Das erfindungsgemäße Getriebe kann Bauraumeinsparungen und/oder Gewichtseinsparungen und/oder Kosteneinsparungen erzielen.

Das erfindungsgemäße Getriebe kann insbesondere ohne einen Einsatz von mechanischen Ventilen auskommen, welche üblicherweise einen Verschleiß aufweisen. rheologische Ventile, insbesondere elektrorheologische Ventile, können gegenüber mechanischen Ventilen sehr einfach aufgebaut sein, insbesondere ohne enge Toleranzen und/oder ohne kritische Reinheitsanforderungen.

Weiterhin kann in dem erfindungsgemäßen Getriebe ein Fluidstrom durch die Blendenleitung und/oder durch die Fluidrückführung, regelbar sein, beispielsweise mittels mindestens eines rheologischen Ventils, bevorzugt in der Fluidrückführung und/oder in der Blendenleitung.

Die vorstehend genannten und die nachstehend noch zu erläuternden Merkmale sind nicht nur in der jeweils angegebenen Kombination, sondern auch in anderen Kombinationen oder in Alleinstellung verwendbar, ohne den Rahmen der vorliegenden Erfindung zu verlassen.

Ausführungsformen der Erfindung sind in den Figuren beispielhaft dargestellt und werden in der Beschreibung der Figuren näher erläutert. Es zeigen:
Fig. 1 Schematische Darstellung eines ersten Ausführungsbeispiels eines erfindungsgemäßen Getriebes;
Fig. 2 Schematische Darstellung eines zweiten Ausführungsbeispiels eines erfindungsgemäßen Getriebes; und
Fig. 3 Schematische Darstellung eines dritten Ausführungsbeispiels eines erfindungsgemäßen Getriebes.

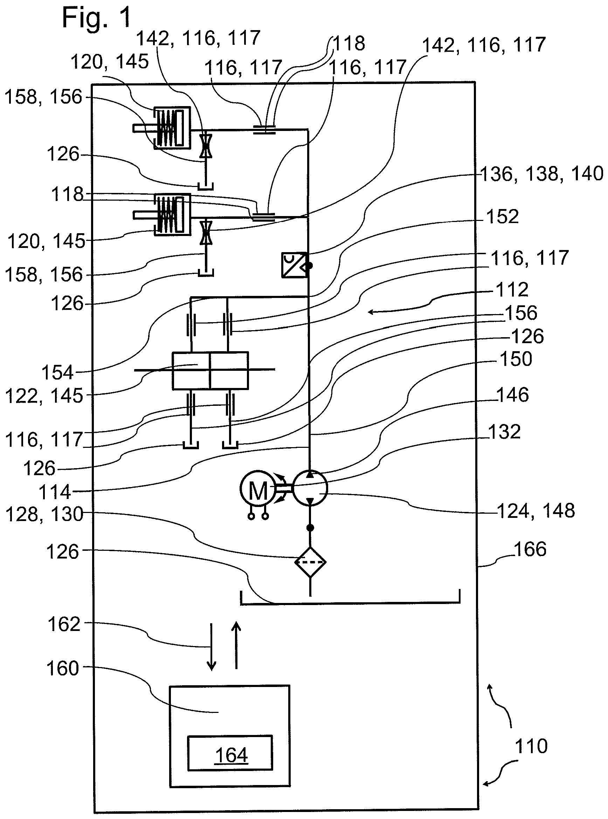

In den Figuren 1, 2 und 3 sind schematische Darstellungen von Ausführungsbeispielen erfindungsgemäßer Getriebe 110 dargestellt.

Das Getriebe 110 weist mindestens einen rheologischen Aktuator 112 auf. Die in Figur 1, Figur 2 und Figur 3 dargestellten Ausführungsbeispiele erfindungsgemäßer Getriebe 110 weisen bevorzugt genau einen rheologischen Aktuator 112 auf. Der rheologische Aktuator 112 weist mindestens ein rheologisches Fluid 114 auf. Der rheologische Aktuator 112 weist mindestens ein rheologisches Ventil 116 auf. Die in Figur 1, Figur 2 und Figur 3 dargestellten Ausführungsbeispiele erfindungsgemäßer Getriebe 110 weisen beispielsweise acht rheologische Ventile 116 auf, beispielsweise für ein Getriebe 110 mit nur zwei Gängen. Beispielsweise können für eine Schaltmuffe jeweils vier rheologische Ventile 116 vorgesehen sein, wobei eine Schaltmuffe vorzugsweise zur Schaltung von zwei Gängen vorgesehen sein kann. Bevorzugt kann das Getriebe 110 mehr als acht rheologische Ventile 116 aufweisen, insbesondere abhängig von einer Anzahl an Gängen des Getriebes 110.

Das rheologische Fluid 1 14 kann beispielsweise mindestens ein elektrorheo logisches Fluid und/oder mindestens ein magnetorheologisches Fluid aufweisen.

Das rheologische Ventil 1 16 kann beispielsweise derart innerhalb des rheologischen Aktuators 1 12 angeordnet sein, dass das rheologische Ventil 116 das rheologische Fluid 1 14, insbesondere einen Pumpendruck, einem jeweiligen Verbraucher 145, beispielsweise einer ersten Kupplung und/oder einer zweiten Kupplung und/oder einer Parksperre und/oder einer Schaltanordnung 122, zuordnet, insbesondere kontinuierlich und/oder zwischen beispielsweise den zwei diskreten Zuständen "an" und "aus".

Das rheologisches Ventil 116 kann beispielsweise ein elektrorheologisches Ventil 117, umfassend insbesondere mindestens zwei Elektroden 118, und/oder ein magnetorheologisches Ventil sein.

Der rheologische Aktuator 112 kann mindestens einen Fluidsumpf 126 und/oder mindestens einen Filter 128, beispielsweise mindestens einen Saugfilter 130 und/oder mindestens einen Druckfilter, und/oder mindestens einen Elektromotor 132 und/oder mindestens eine Pumpe 124 und/oder mindestens einen Sensor 136, beispielsweise mindestens einen Drucksensor 138 und/oder mindestens einen Temperatursensor 140, und/oder mindestens eine Blende 142, insbesondere mindestens eine regelbare Blende 142, und/oder mindestens eine Fluidrückführung 156 aufweisen.

Das Getriebe 110 kann mindestens einen Verbraucher 145 aufweisen. Der rheologische Aktuator 112 kann eingerichtet sein um den Verbraucher 145 mit rheologischem Fluid 114 zu beaufschlagen.

Das Getriebe 1 10 kann mindestens eine Kupplung 120 aufweisen. Die in Figur 1 und Figur 2 und Figur 3 dargestellten erfindungsgemäßen Getriebe 110 weisen bevorzugt zwei Kupplungen 120 auf, insbesondere mindestens eine Doppelkupplung. Der rheologische Aktuator 112 kann beispielsweise eingerichtet sein um die Kupplung 120 mit dem rheologischen Fluid 114 zu beaufschlagen, bevorzugt zur Betätigung der Kupplung 120.

Das Getriebe 110 kann beispielsweise mindestens eine Schaltanordnung 122 aufweisen. Der rheologische Aktuator 1 12 kann eingerichtet sein um die Schaltanordnung 122 mit dem rheologischen Fluid 1 14 zu beaufschlagen, bevorzugt zur Betätigung der Schaltanordnung 122.

Das Getriebe 110 kann beispielsweise mindestens eine Schaltmuffe 168 aufweisen. Der rheologische Aktuator 1 12 kann für jede Schaltmuffe 168 mindestens eine, bevorzugt zwei, Fluidrückführungen 156, insbesondere zu dem Fluidsumpf 126, mit jeweils mindestens einem rheologischen Ventil 116 aufweisen und/oder mindestens eine, bevorzugt zwei, Verbraucherleitungen 154 mit jeweils mindestens einem rheologischen Ventil 116.

Das Getriebe 1 10 kann beispielsweise mindestens eine Parksperre aufweisen. Der rheologische Aktuator 112 kann beispielsweise eingerichtet sein um die Parksperre mit dem rheologischen Fluid 114 zu beaufschlagen, bevorzugt zur Betätigung der Parksperre.

Der rheologische Aktuator 1 12 kann mindestens eine, bevorzugt genau eine Pumpe 124 aufweisen.

Die Pumpe 124 kann beispielsweise eine bidirektionale Pumpe sein.

Das rheologische Ventil 116 kann beispielsweise zwischen der Pumpe 124 und mindestens einem Verbraucher 145 angeordnet ist, bevorzugt zwischen der Pumpe 124 und mindestens einer Kupplung 120 und/oder zwischen der Pumpe 124 und mindestens einer Schaltanordnung 122 und/oder zwischen der Pumpe 124 und der Parksperre.

Das Getriebe 110 kann mindestens zwei rheologische Ventile 116 aufweisen. Mindestens ein rheologisches Ventil 116 kann zwischen der Pumpe 124 und der Schaltanordnung 122 angeordnet sein. Mindestens ein weiteres rheologisches Ventil 116 kann zwischen der Pumpe 124 und der Kupplung 122 angeordnet sein.

Das Getriebe 110 kann bevorzugt genau einen rheologischen Aktuator 112 aufweisen. Der rheologische Aktuator 112 kann bevorzugt genau eine Pumpe 124 und genau einen Elektromotor 132 aufweisen. Der rheologische Aktuator 112 kann eingerichtet sein um mindestens die Kupplung 120, bevorzugt zwei Kupplungen 120, und/oder mindestens die Schaltanordnung 122 und/oder mindestens die Parksperre zu betätigen.

Das Getriebe 110 kann bevorzugt mindestens zwei Kupplungen 120 aufweisen.

Bevorzugt kann der Filter 128, insbesondere der Saugfilter 130, zwischen dem Fluidsumpf 126 und der Pumpe 124, insbesondere als bidirektionale Pumpe 148 ausgestaltet, angeordnet sein. Die Pumpe 124 kann bevorzugt durch den Elektromotor 132 betreibbar sein.

In der Pumprichtung 146 der Pumpe 124 kann bevorzugt der Filter 128, insbesondere der Saugfilter 130, auf den Fluidsumpf 126 folgen. Auf den Filter 128 kann in Pumprichtung 146 insbesondere die Pumpe 124 folgen, welche bevorzugt durch den Elektromotor 132 betrieben wird. An einer Stelle zwischen der Pumpe 124 und einem der Verbraucher 145, beispielsweise einer Kupplung 120, insbesondere einer der zwei Kupplungen 120, und/oder der Schaltanordnung 122 und/oder der Parksperre, kann bevorzugt der Sensor 136, insbesondere der Drucksensor 138, angeordnet sein. Der rheologische Aktuator 112 kann mindestens eine Hauptleitung 150 und/oder mindestens eine Leitungsabzweigung 152 und/oder mindestens eine Verbraucherleitung 154 und/oder mindestens eine Blendenleitung 158 aufweisen.

Der rheologische Aktuator 112 kann mindestens eine Verbraucherleitung 152 und mindestens eine Blendenleitung 158 aufweisen. Die Blendenleitung 158 kann eingerichtet sein, um rheologisches Fluid 114 zu dem Fluidsumpf 126 zu leiten. Das rheologische Ventil 116 kann in einer Verbraucherleitung 154 und/oder in einer Hauptleitung 150 und/oder in einer parallel zu der Blendenleitung 158 angeordneten Fluidrückführung 156 angeordnet sein.

Das rheologische Ventil 116 kann vor einer Leitungsabzweigung 152 zu der Blendenleitung 158 angeordnet sein.

Die Verbraucherleitung 154 kann eingerichtet sein, um rheologisches Fluid 114 von der Hauptleitung 150 zu mindestens einem der Verbraucher 145 und/oder zu einer Verbraucherleitung 154 zu leiten. Die Verbraucherleitung 154 kann bevorzugt von der Hauptleitung 150 abzweigen, insbesondere an einer Leitungsabzweigung 152. Der Drucksensor 138 kann bevorzugt an der Hauptleitung 150 angeordnet sein. Die Verbraucherleitung 154 und/oder die Blendenleitung 158 können bevorzugt mindestens ein rheologisches Ventil 116, wie oben beschrieben, aufweisen. Die Blendenleitung 158 kann bevorzugt die Blende 142 aufweisen. Die Blendenleitung 158 kann beispielsweise die Fluidrückführung 156 bilden und/oder eine Leckagefunktion aufweisen. Die Blendenleitung 158 kann eingerichtet sein um rheologisches Fluid 1 14 zu dem Fluidsumpf 126 zu leiten. Das rheologische Ventil 116 in der Verbraucherleitung 154 kann bevorzugt vor einer Leitungsabzweigung 152 zu der Blendenleitung 158 angeordnet sein. Unter dem Ausdruck "vor" kann im Rahmen der vorliegenden Erfindung insbesondere eine Positionierung näher an der Pumpe 124 verstanden werden.

Unter dem Ausdruck "hinter" kann im Rahmen der vorliegenden Erfindung insbesondere eine weiter von der Pumpe 124 entferntere Positionierung verstanden werden. Die Leitungsabzweigung 152 der Blendenleitung 158 von der Verbraucherleitung 154 kann bevorzugt hinter der Leitungsabzweigung 152 der Verbraucherleitung 154 von der Hauptleitung 150 angeordnet sein. Bevorzugt kann der rheologische Aktuator 112 eingerichtet sein, um mindestens zwei Kupplungen 120 zu beaufschlagen. Beispielsweise kann der rheologische Aktuator 1 12 für jede Kupplung 120 jeweils mindestens eine Verbraucherleitung 154 und/oder mindestens eine Blendenleitung 158 mit jeweils einem rheologischen Ventil 1 16 in der Verbraucherleitung 154 und/oder mindestens einem rheologischen Ventil 116 in der Blendenleitung 158 und/oder mindestens einer Blende 142 in der Blendenleitung 158 aufweisen.

Beispielsweise kann der rheologische Aktuator 112 zur Beaufschlagung der Schaltanordnung 122 mindestens eine Verbraucherleitung 154 aufweisen. Der rheologische Aktuator 112 kann zur Beaufschlagung jeder Schaltmuffe der Schaltanordnung 122 beispielsweise mindestens eine Verbraucherleitung 154 mit mindestens einem rheologischen Ventil 1 16 aufweisen. Die Verbraucherleitungen 154 zu den Schaltmuffen können beispielsweise aus genau einer Leitungsabzweigung 152 aus der Hauptleitung 150 oder aus mehreren Leitungsabzweigungen 152 aus der Hauptleitung 150 abzweigen. Beispielsweise kann der rheologische Aktuator 112 für jede Schaltmuffe mindestens eine, vorzugsweise zwei, Fluidrückführungen 156, mit jeweils mindestens einem rheologischen Ventil 1 16 aufweisen. Zusätzlich kann der rheologische Aktuator 112 für die Parksperre mindestens eine Verbraucherleitung 154 aufweisen und/oder mindestens eine Blendenleitung 158. Bevorzugt kann die Leitungsabzweigung 152 der Verbraucherleitung 154 der Schaltanordnung 122 von der Hauptleitung 150 vor den Leitungsabzweigungen 152 der Verbraucherleitungen 154 der Kupplungen 120 von der Hauptleitung 150 angeordnet sein. Der Sensor 136, insbesondere der Drucksensor 138, kann bevorzugt zwischen der Leitungsabzweigung 152 der Verbraucherleitung 154 der Schaltanordnung 122 von der Hauptleitung 150 und den Leitungsabzweigungen 152 der Verbraucherleitungen 154 der Kupplungen 120 von der Hauptleitung 150 angeordnet sein.

Das Getriebe 110 kann mindestens eine Ansteuerung 160 umfassen. Die Ansteuerung 160 kann über mindestens eine Schnittstelle 162 mit dem rheologischen Aktuator 112, insbesondere mit der Pumpe 124 und/oder mit dem rheologischen Ventil 1 16 oder mit mindestens einem der rheologischen Ventile 116, verbunden sein. Die Ansteuerung 160 kann mindestens eine Datenverarbeitungsvorrichtung 164 umfassen.

Das Getriebe 110 kann weiterhin mindestens ein Getriebegehäuse 166 aufweisen.

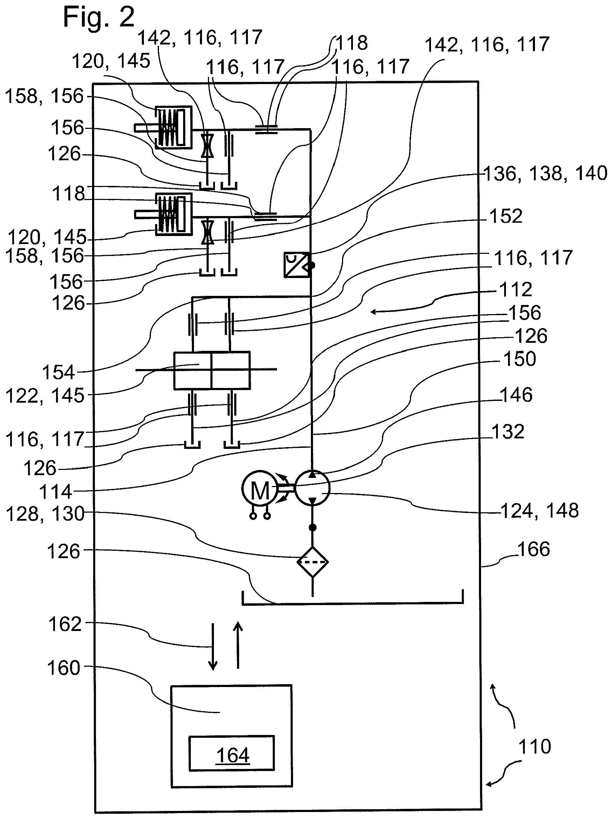

Das in Figur 2 dargestellte zweite Ausführungsbeispiel eines erfindungsgemäßen Getriebes 110 kann prinzipiell wie das in Figur 1 dargestellte erste Ausführungsbeispiel eines erfindungsgemäßen Getriebes 110 ausgestaltet sein.

In dem in Figur 2 dargestellten zweiten Ausführungsbeispiel des erfindungsgemäßen Getriebes 110 kann beispielsweise parallel zu der Blendenleitung 158 mindestens eine Fluidrückführung 156 angeordnet sein, welche bevorzugt die Verbraucherleitung 145 mit dem Fluidsumpf 126 verbinden kann, insbesondere steuerbar durch mindestens ein rheologisches Ventil 116. Diese Fluidrückführung 156 kann beispielsweise eingerichtet sein, um, insbesondere in Kombination mit der Blendenleitung 158, die Verbraucherleitung 154 zu der Kupplung 120 möglichst schnell genug zu entleeren, so dass die Kupplung 120 geöffnet wird.

Bevorzugt können vor beiden Kupplungen 120 mindestens eine Fluidrückführung 156 angeordnet sein, welche insbesondere derart dimensioniert sein können, dass bei geschlossenem rheologischem Ventil 116 der jeweiligen Verbraucherleitung 154 der Kupplung 120 die Verbraucherleitung 120 zwischen der Kupplung 120 und dem rheologischen Ventil 116 der Verbraucherleitung 154 ausreichend schnell genug entleert werden kann, beispielsweise um die jeweilige Kupplung 120 zu öffnen.

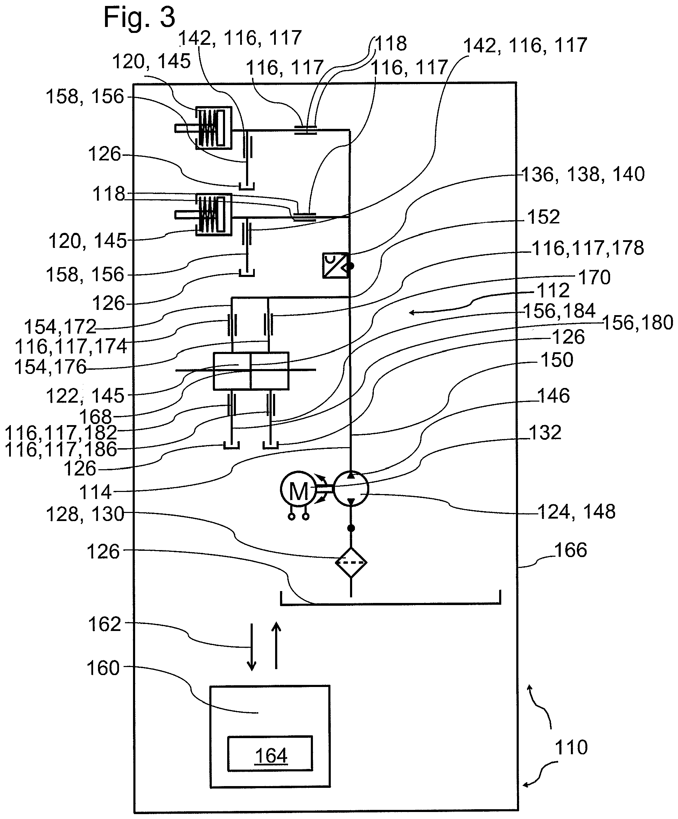

Das in Figur 3 dargestellte dritte Ausführungsbeispiel eines erfindungsgemäßen Getriebes 110 kann prinzipiell wie das in Figur 1 dargestellte erste Ausführungsbeispiel eines erfindungsgemäßen Getriebes 110 ausgestaltet sein.

Bei dem in Figur 3 dargestellten Ausführungsbeispiel kann im Vergleich zu dem in Figur 1 dargestellten Ausführungsbeispiel insbesondere die Blende 142 der Fluidrückführung 156 der beiden Kupplungen 120 als rheologisches Ventil 116 ausgestaltet sein. Das rheologische Ventil 116 kann hierbei insbesondere als regelbare Blende ausgestaltet sein. In einem weiteren Aspekt der vorliegenden Erfindung wird ein Verfahren zum Betrieb des oben beschriebenen Getriebes 110 vorgeschlagen. Das Verfahren kann beispielsweise von der Ansteuerung 160 durchgeführt werden.

Das Getriebe 110 weist mindestens einen rheologischen Aktuator 112 auf. Der rheologische Aktuator 112 weist mindestens ein rheologisches Fluid 114 auf. Der rheologische Aktuator 112 weist mindestens ein rheologisches Ventil 116 auf. In dem Verfahren werden mittels des rheologischen Aktuators 112 mindestens eine Kupplung 120 und/oder mindestens eine Schaltanordnung 122 und/oder mindestens eine Parksperre betätigt.

Beispielsweise können, wie in den Figuren 1 bis 3 dargestellt, mindestens ein rheologisches Ventil 116, bevorzugt vier rheologische Ventile 116, derart innerhalb des rheologischen Aktuators 112 angeordnet sein, dass eine Schaltanordnung 122 von einem eingelegten Zustand eines Ganges in einen ausgelegten Zustand eines Ganges überführt werden kann, insbesondere durch ein Öffnen mindestens eines rheologischen Ventils 116, bevorzugt jeweils zweier rheologischer Ventile 116, und/oder durch ein Schließen jeweils zweier rheologischer Ventile 116.

Das Getriebe 110, insbesondere die Schaltanordnung 122, kann mindestens eine Schaltmuffe 168 aufweisen, wie insbesondere in Figur 3 dargestellt. Bevorzugt kann das Getriebe 110 mehrere Schaltmuffen 168 aufweisen. Der rheologische Aktuator 112 kann für jede Schaltmuffe 168 mindestens eine Fluidrückführung 156, bevorzugt zwei Fluidrückführungen 156, mit jeweils mindestens einem rheologischen Ventil 116 und/oder mindestens eine Verbraucherleitung 154, bevorzugt zwei Verbraucherleitungen 154, mit jeweils mindestens einem rheologischen Ventil 116 aufweisen.

Die Schaltmuffe 168 kann beispielsweise eine Vorrichtung sein, welche eingerichtet ist, um einen Gang des Getriebes 110 einzulegen, insbesondere durch Herstellung einer formschlüssigen Verbindung zwischen einer Welle und einem Zahnrad. Eine Schaltmuffe 168 kann beispielsweise für mindestens zwei Gänge zuständig sein. Beispielsweise kann eine Schaltmuffe 168 in einem Getriebe 110 einen Zustand in einer Mittelstellung aufweisen, insbesondere ohne formschlüssige Verbindung zwischen der Welle und einem Zahnrad.

Weiterhin kann die Schaltmuffe 168 einen Zustand in einer ersten Stellung einnehmen, bei welcher eine formschlüssige Verbindung zwischen der Welle und einem ersten Zahnrad vorliegen kann. Weiterhin kann die Schaltmuffe 168 einen Zustand in einer zweiten Stellung einnehmen, bei welcher eine formschlüssige Verbindung zwischen der Welle und einem zweiten Zahnrad vorliegen kann.

Ein rheologisches Ventil 1 16 einer Fluidrückführung 156 der Schaltmuffe 168 kann eingerichtet sein, um rheologisches Fluid 114 in den Fluidsumpf 126 abzulassen. Ein rheologisches Ventil 114 einer Verbraucherleitung 154 der Schaltmuffe 168 kann eingerichtet sein, um einen Kolben 170 der Schaltmuffe 168 mit rheologischem Fluid 114, insbesondere mit Pumpendruck, zu beaufschlagen.

Beispielsweise kann der rheologische Aktuator 112 zu einer Schaltmuffe 168 eine erste Verbraucherleitung 172 mit einem ersten rheologischen Ventil 174 und eine zweite Verbraucheileitung 176 mit einem zweiten rheologischen Ventil 178 und eine erste Fluidrückführung 180 mit einem dritten rheologischen Ventil 182 und eine zweite Fluidrückführung 184 mit einem vierten rheologischen Ventil 186 aufweisen.

Die rheologischen Ventile 116 der Verbraucherleitungen 154, insbesondere der ersten Verbraucherleitung 172 und der zweiten Verbraucherleitung 176, können insbesondere eingerichtet sein, um einen Kolben 170 der Schaltmuffe 168 derart mit rheologischem Fluid 114 zu beaufschlagen, dass dieser sich bewegt, insbesondere derart, dass die Schaltmuffe 168 Ihren Zustand zwischen verschieden Zuständen verändert. Bei den Zuständen kann es sich um eine Mittelstellung und/oder um eine erste Stellung und/oder um eine zweite Stellung handeln. Die rheologischen Ventile 116 der Fluidrückführungen 156, insbesondere der ersten Fluidrückführung 180 und der zweiten Fluidrückführung 184, können insbesondere eingerichtet sein, um in einem geöffneten Zustand des dritten rheologischen Ventils 182 und/oder des vierten rheologischen Ventils 186, rheologisches Fluid 114 in den Fluidsumpf 126 abzulassen und in einem geschlossenen Zustand einen Fluiddruck an dem jeweiligen Kolben 170 zu halten.

Um die Schaltmuffe 168 in die ersten Stellung zu bringen und/oder in der ersten Stellung zu halten können insbesondere das erste rheologische Ventil 174 und das vierte rheologische Ventil 186 geschlossen sein und das zweite rheologische Ventil 178 und das dritte rheologische Ventil 182 geöffnet sein.

Um die Schaltmuffe 168 in die zweite Stellung zu bringen und/oder in der zweiten Stellung zu halten können insbesondere das zweite rheologische Ventil 178 und das dritte rheologische Ventil 182 geschlossen sein und das erste rheologische Ventil 174 und das vierte rheologische Ventil 186 geöffnet sein.

**Bezugszeichenliste**

| | |
|---|---|
| 110 Getriebe | 158 Blendenleitung |
| 112 rheologischer Aktuator | 160 Ansteuerung |
| 114 rheologisches Fluid | 162 Schnittstelle |
| 116 rheologisches Ventil | 164 Datenverarbeitungsvorrichtung |
| 117 elektrorheologisches Ventil | 166 Getriebegehäuse |
| 118 Elektrode | 168 Schaltmuffe |
| 120 Kupplung | 170 Kolben |
| 122 Schaltanordnung | 172 erste Verbraucherleitung |
| 124 Pumpe | 174 erstes rheologisches Ventil |
| 126 Fluidsumpf | 176 zweite Verbraucherleitung |
| 128 Filter | 178 zweites rheologisches Ventil |
| 130 Saugfilter | 180 erste Fluidrückführung |
| 132 Elektromotor | 182 drittes rheologisches Ventil |
| 136 Sensor | 184 zweite Fluidrückführung |
| 138 Drucksensor | 86 viertes rheologisches Ventil |
| 140 Temperatursensor | |
| 142 Blende | |
| 145 Verbraucher | |
| 146 Pumprichtung | |
| 148 bidirektionale Pumpe | |
| 150 Hauptleitung | |
| 152 Leitungsabzweigung | |
| 54 Verbraucherleitung | |
| 156 Fluidrückführung | |

## Patentansprüche

1. Getriebe (110) für ein Kraftfahrzeug, wobei das Getriebe (110) mindestens einen rheologischen Aktuator (112), mindestens eine Pumpe (124) und mindestens einem Verbraucher (145) aufweist, wobei der rheologische Aktuator (112) mindestens ein rheologisches Fluid (114) aufweist, wobei der rheologische Aktuator (112) mindestens ein rheologisches Ventil (116) aufweist, wobei das mindestens eine rheologische Ventil (116) derart innerhalb des rheologischen Aktuators (112) angeordnet ist, dass das mindestens eine rheologische Ventil (116) das rheologische Fluid (114) einem jeweiligen Verbraucher (145) zuordnet,
**dadurch gekennzeichnet**
**dass** das mindestens eine rheologische Ventil (116), bevorzugt mehrere rheologische Ventile (116), derart in dem rheologischen Aktuator (112) angeordnet ist, dass das rheologische Fluid (114), insbesondere ein Pumpendruck, durch zumindest teilweises Öffnen und Schließen des mindestens einen rheologischen Ventils (116) zwischen unterschiedlichen Verbrauchern (145) aufgeteilt wird.

2. Getriebe (110) nach Anspruch 1, wobei das Getriebe (110) mindestens eine Kupplung (120) aufweist, wobei der rheologische Aktuator (112) eingerichtet ist um die Kupplung (120) mit dem rheologischen Fluid (114) zu beaufschlagen, bevorzugt zur Betätigung der Kupplung (120).

3. Getriebe (110) nach einem der vorhergehenden Ansprüche, wobei das Getriebe (1 10) mindestens eine Schaltanordnung (122) aufweist, wobei der rheologische Aktuator (112) eingerichtet ist um die Schaltanordnung (122) mit dem rheologischen Fluid (1 14) zu beaufschlagen, bevorzugt zur Betätigung der Schaltanordnung (122).

4. Getriebe (110) nach dem vorhergehenden Anspruch, wobei das Getriebe (110) mindestens eine Schaltmuffe (168) aufweist, wobei der rheologische Aktuator (112) für jede Schaltmuffe (168) mindestens eine Fluidrückführung (156), bevorzugt zwei Fluidrückführungen (156), mit jeweils mindestens einem rheologischen Ventil (116) und/oder mindestens eine Verbraucherleitung (154), bevorzugt zwei Verbraucherleitungen (154), mit jeweils mindestens einem rheologischen Ventil (116) aufweist.

5. Getriebe (110) nach einem der vorhergehenden Ansprüche, wobei das Getriebe (110) mindestens eine Parksperre aufweist, wobei der rheologische Aktuator (112) eingerichtet ist um die Parksperre mit dem rheologischen Fluid (114) zu beaufschlagen, bevorzugt zur Betätigung der Parksperre.

6. Getriebe (110) nach einem der vorhergehenden Ansprüche, wobei das Getriebe (110) genau einen rheologischen Aktuator (112) aufweist, wobei der rheologische Aktuator (112) genau eine Pumpe (124) und genau einen Elektromotor (132) aufweist.

7. Getriebe (110) nach einem der vorhergehenden Ansprüche, wobei das Getriebe (110) mindestens zwei Kupplungen (120) aufweist.

8. Getriebe (110) nach einem der vorhergehenden Ansprüche, wobei der rheologische Aktuator (112) mindestens eine Pumpe (124) aufweist.

9. Getriebe (110) nach dem vorhergehenden Anspruch, wobei die Pumpe (124) eine bidirektionale Pumpe ist.

10. Getriebe (110) nach einem der beiden vorhergehenden Ansprüche, wobei das rheologische Ventil (116) zwischen der Pumpe (124) und mindestens einem Verbraucher (145) angeordnet ist, bevorzugt zwischen der Pumpe (124) und mindestens einer Kupplung (120) und/oder zwischen der Pumpe (124) und mindestens einer Schaltanordnung (122).

11. Getriebe (110) nach einem der drei vorhergehenden Ansprüche, wobei das Getriebe (110) mindestens zwei rheologische Ventile (116) aufweist, wobei mindestens ein erstes rheologisches Ventil zwischen der Pumpe (124) und der Schaltanordnung (122) angeordnet ist und wobei mindestens ein zweites rheologisches Ventil zwischen der Pumpe (124) und der Kupplung (122) angeordnet ist.

12. Getriebe (110) nach einem der vorhergehenden Ansprüche, wobei der rheologische Aktuator (112) mindestens eine Verbraucherleitung (152) und mindestens eine Blendenleitung (158) aufweist, wobei die Blendenleitung (158) eingerichtet ist um rheologisches Fluid (114) zu einem Fluidsumpf (126) zu leiten, wobei das rheologische Ventil (116) in einer Verbraucherleitung (154) und/oder in einer Hauptleitung (150) und/oder in einer parallel zu der Blendenleitung (158) angeordneten Fluidrückführung (156) angeordnet ist.

13. Getriebe (110) nach dem vorhergehenden Anspruch, wobei das rheologische Ventil (116) vor einer Leitungsabzweigung (152) zu der Blendenleitung (158) angeordnet ist.

## Claims

1. Transmission (110) for a motor vehicle, the transmission (110) having at least one rheological actuator (112), at least one pump (124) and at least one consumer (145), the rheological actuator (112) having at least one rheological fluid (114), the rheological actuator (112) having at least one rheological valve (116), the at least one rheological valve (116) being arranged within the rheological actuator (112) in such a way that the at least one rheological valve (116) assigns the rheological fluid (114) to a respective consumer (145), **characterized in that** the at least one rheological valve (116), preferably a plurality of rheological valves (116), is/are arranged in the rheological actuator (112) in such a way that the rheological fluid (114), in particular a pump pressure, is split between different consumers (145) by way of at least partial opening and closing of the at least one rheological valve (116).

2. Transmission (110) according to Claim 1, the transmission (110) having at least one clutch (120), the rheological actuator (112) being set up to load the clutch (120) with the rheological fluid (114), preferably for the actuation of the clutch (120).

3. Transmission (110) according to either of the preceding claims, the transmission (110) having at least one shifting arrangement (122), the rheological actuator (112) being set up to load the shifting arrangement (122) with the rheological fluid (114), preferably for the actuation of the shifting arrangement (122).

4. Transmission (110) according to the preceding claim, the transmission (110) having at least one selector sleeve (168), the rheological actuator (112) having, for each selector sleeve (168), at least one fluid return line (156), preferably two fluid return lines (156), with in each case at least one rheological valve (116), and/or having at least one consumer line (154), preferably two consumer lines (154), with in each case at least one rheological valve (116).

5. Transmission (110) according to one of the preceding claims, the transmission (110) having at least one parking lock, the rheological actuator (112) being set up to load the parking lock with the rheological fluid (114), preferably for the actuation of the parking lock.

6. Transmission (110) according to one of the preceding claims, the transmission (110) having precisely one rheological actuator (112), the rheological actuator (112) having precisely one pump (124) and precisely one electric motor (132).

7. Transmission (110) according to one of the preceding claims, the transmission (110) having at least two clutches (120).

8. Transmission (110) according to one of the preceding claims, the rheological actuator (112) having at least one pump (124).

9. Transmission (110) according to the preceding claim, the pump (124) being a bidirectional pump.

10. Transmission (110) according to either of the two preceding claims, the rheological valve (116) being arranged between the pump (124) and at least one consumer (145), preferably between the pump (124) and at least one clutch (120), and/or between the pump (124) and at least one shifting arrangement (122).

11. Transmission (110) according to one of the three preceding claims, the transmission (110) having at least two rheological valves (116), at least one first rheological valve being arranged between the pump (124) and the shifting arrangement (122), and at least one second rheological valve being arranged between the pump (124) and the clutch (122).

12. Transmission (110) according to one of the preceding claims, the rheological actuator (112) having at least one consumer line (152) and at least one orifice line (158), the orifice line (158) being set up to conduct rheological fluid (114) to a fluid sump (126), the rheological valve (116) being arranged in a consumer line (154) and/or in a main line (150) and/or in a fluid return line (156) which is arranged parallel to the orifice line (158).

13. Transmission (110) according to the preceding claim, the rheological valve (116) being arranged upstream of a line branch (152) to the orifice line (158).

## Revendications

1. Boîte de vitesses (110) pour véhicule automobile, la boîte de vitesses (110) présentant au moins un actionneur rhéologique (112), au moins une pompe (124) et au moins un consommateur (145), l'actionneur rhéologique (112) présentant au moins un fluide rhéologique (114), l'actionneur rhéologique (112) présentant au moins une soupape rhéologique (116), l'au moins une soupape rhéologique (116) étant disposée à l'intérieur de l'actionneur rhéologique (112) de telle sorte que l'au moins une soupape rhéologique (116) associe le fluide rhéologique (114) à un consommateur respectif (145),
**caractérisée en ce que**
l'au moins une soupape rhéologique (116), de préférence plusieurs soupapes rhéologiques (116), sont disposées dans l'actionneur rhéologique (112) de telle sorte que le fluide rhéologique (114), en particulier une pression de pompe, soit divisé entre différents consommateurs (145) par ouverture et fermeture au moins partielles de l'au moins une soupape rhéologique (116).

2. Boîte de vitesses (110) selon la revendication 1, la boîte de vitesses (110) présentant au moins un embrayage (120), l'actionneur rhéologique (112) étant prévu pour solliciter l'embrayage (120) avec le fluide rhéologique (114), de préférence pour l'actionnement de l'embrayage (120).

3. Boîte de vitesses (110) selon l'une quelconque des revendications précédentes, la boîte de vitesses (110) présentant au moins un agencement de commutation (122), l'actionneur rhéologique (112) étant prévu pour solliciter l'agencement de commutation (122) avec le fluide rhéologique (114), de préférence pour l'actionnement de l'agencement de commutation (122).

4. Boîte de vitesses (110) selon la revendication précédente, la boîte de vitesses (110) présentant au moins un manchon de commutation (168), l'actionneur rhéologique (112) présentant, pour chaque manchon de commutation (168), au moins une recirculation de fluide (156), de préférence deux recirculations de fluide (156), avec à chaque fois au moins une soupape rhéologique (116) et/ou au moins une conduite de consommateur (154), de préférence deux conduites de consommateurs (154) avec à chaque fois au moins une soupape rhéologique (116).

5. Boîte de vitesses (110) selon l'une quelconque des revendications précédentes, la boîte de vitesses (110) présentant au moins un verrouillage de stationnement, l'actionneur rhéologique (112) étant prévu pour solliciter le verrouillage de stationnement avec le fluide rhéologique (114), de préférence pour actionner le verrouillage de stationnement.

6. Boîte de vitesses (110) selon l'une quelconque des revendications précédentes, la boîte de vitesses (110) présentant exactement un actionneur rhéologique (112), l'actionneur rhéologique (112) présentant exactement une pompe (124) et exactement un moteur électrique (132).

7. Boîte de vitesses (110) selon l'une quelconque des revendications précédentes, la boîte de vitesses (110) présentant au moins deux embrayages (120).

8. Boîte de vitesses (110) selon l'une quelconque des revendications précédentes, l'actionneur rhéologique (112) présentant au moins une pompe (124).

9. Boîte de vitesses (110) selon la revendication précédente, la pompe (124) étant une pompe bidirectionnelle.

10. Boîte de vitesses (110) selon l'une quelconque des deux revendications précédentes, la soupape rhéologique (116) étant disposée entre la pompe (124) et au moins un consommateur (145), de préférence entre la pompe (124) et au moins un embrayage (120) et/ou entre la pompe (124) et au moins un agencement de commutation (122).

11. Boîte de vitesses (110) selon l'une quelconque des trois revendications précédentes, la boîte de vitesses (110) présentant au moins deux soupapes rhéologiques (116), au moins une première soupape rhéologique étant disposée entre la pompe (124) et l'agencement de commutation (122) et au moins une deuxième soupape rhéologique étant disposée entre la pompe (124) et l'embrayage (122).

12. Boîte de vitesses (110) selon l'une quelconque des revendications précédentes, l'actionneur rhéologique (112) présentant au moins une conduite de consommateur (152) et au moins une conduite de diaphragme (158), la conduite de diaphragme (158) étant prévue pour conduire du fluide rhéologique (114) jusqu'à un puisard de fluide (126), la soupape rhéologique (116) étant disposée dans une conduite de consommateur (154) et/ou dans une conduite principale (150) et/ou dans une recirculation de fluide (156) disposée parallèlement à la conduite de diaphragme (158).

13. Boîte de vitesses (110) selon la revendication précédente, la soupape rhéologique (116) étant disposée avant une dérivation de conduite (152) allant à la conduite de diaphragme (158).
